# EUROPÄISCHE PATENTSCHRIFT

(11) **EP 3 275 693 B1**
(45) Veröffentlichungstag und Bekanntmachung des Hinweises auf die Patenterteilung: **15.05.2019**
(21) Anmeldenummer: 17183412.0
(22) Anmeldetag: 26.07.2017
(51) Int. Cl.: B60B 27/04, B60B 27/02, F16D 41/24, F16D 41/36

(54) **NABE INSBESONDERE FÜR FAHRRÄDER**
COLLAR, IN PARTICULAR FOR BICYCLES
MOYEU, EN PARTICULIER POUR VÉLOS

(30) Priorität: 26.07.2016 DE 102016113731; 26.07.2016 DE 102016113733
(43) Veröffentlichungstag der Anmeldung: 31.01.2018
(73) Patentinhaber: DT Swiss AG, 2504 Biel (CH)
(72) Erfinder: WALTHERT, Martin, 3270 Aarberg (CH)
(74) Vertreter: BSB Patentanwälte Schütte & Engelen Partnerschaft mbB

(56) Entgegenhaltungen:
- DE-A1-102010 033 268
- DE-A1-102012 016 945
- FR-A- 1 105 376
- GB-A- 668 943
- US-B1- 6 669 306

## Beschreibung

Die vorliegende Erfindung betrifft eine Nabe für wenigstens teilweise muskelbetriebene Fahrzeuge und insbesondere Fahrräder, wobei die Nabe ein Nabengehäuse umfasst, welches mit zwei an gegenüberliegenden Endbereichen des Nabengehäuses angeordneten Wälzlagern gegenüber einer Nabenachse drehbar gelagert ist. Die Nabe weist einen Rotor zur drehfesten Anordnung wenigstens eines Ritzels auf, der mit wenigstens zwei Rotorlagern gegenüber der Nabenachse drehbar gelagert ist. Zwischen dem Rotor und dem Nabengehäuse ist eine Freilaufeinrichtung vorgesehen.

Außer bei Fahrrädern kann die Nabe auch bei anderen teilweise muskelbetriebenen Fahrzeugen und Zweirädern eingesetzt werden, die zum Beispiel über einen elektrischen Hilfsantrieb verfügen. Insbesondere wird die Nabe bei sportlichen Fahrrädern eingesetzt.

Im Stand der Technik sind diverse Naben bekannt geworden, die einen Freilauf aufweisen, damit sich bei zum Beispiel einer Bergabfahrt die Tretkurbel nicht ständig mitdreht. Ein solcher Freilauf bewirkt auch, dass sich das Nabengehäuse und der Rotor beim Rückwärtstreten gegeneinander drehen können.

Im Stand der Technik sind Naben mit Sperrklinkenfreiläufen bekannt geworden, bei denen die Sperrklinken radial zwischen einer Freilaufstellung und einer Eingriffsstellung verschwenken können. Solche Naben verfügen über eine unterschiedliche Anzahl von Sperrklinken, wobei oft vier Sperrklinken symmetrisch auf dem Umfang verteilt angeordnet sind. Die Sperrklinken greifen bei Kraftübertragung in eine Verzahnung im Rotor ein. Durch die relativ geringe Zahl an Sperrklinken ist ein relativ großer Drehwinkel erforderlich, bis beim Antreten wieder ein Drehmoment übertragen wird.

Mit der GB 668,943 ist eine Freilaufnabe für Fahrräder bekannt geworden, bei der in das Nabengehäuse ein schalenförmiges Teil eingeschraubt ist, an dessen Innenseite die Lauffläche für die Kugel des Kugellagers ausgebildet ist, während an einer sich radial nach außen erstreckenden Wandung eine Axialverzahnung ausgebildet ist, die zusammen mit einer Axialverzahnung an dem Rotor einen Axialfreilauf bildet. Durch die größere Anzahl der Zähne der Axialverzahnung bedingt, wird ein schnellerer Wiedereingriff beim Antritt erreicht. Nachteilig bei diesem System ist aber, dass der Rotor sich in axialer Richtung verschiebt, wenn die Nabe in den Freilaufzustand und in den Eingriffszustand überführt wird. Das könnte bei heutigen Systemen zu einer Gangumschaltung führen. Außerdem kann von außen Schmutz und Feuchtigkeit in den Freilauf und das Innere der Nabe eindringen und die Funktion beeinträchtigen oder sogar vollständig verhindern, was Gefahr für den Fahrer mit sich bringt.

Mit der FR 1 105 376 ist eine Nabe für Mopeds bekannt geworden. Die Nabe weist auf einer Seite der Nabe ein einziges Ritzel für den Motorantrieb und auf der anderen ein einziges Ritzel für den Pedalantrieb auf. Der Freilauf für den Pedalantrieb ist aufgrund des Motorantriebs regelmäßig im Freilaufzustand. Das Ritzel für den Pedalantrieb verschiebt sich zwischen der Freilaufposition und der Antriebsposition in axialer Richtung.

Mit der DE 94 19 357 U1 ist eine Nabe mit einem Zahnscheibenfreilauf bekannt geworden, der zuverlässig und sehr schnell die Antriebskraft von dem Rotor auf das Nabengehäuse überträgt, während andererseits die Reibungsverluste relativ gering sind, wenn der Benutzer die Pedale nicht betätigt. Ein Zahnscheibenfreilauf hat viele Vorteile und ermöglicht ein besonders schnelles Ansprechen des Freilaufs. Bei diesem Freilauf wird über ein Paar von Zahnscheiben ein Vorwärtsdrehmoment des Rotors übertragen, während beim Rückwärtstreten die Zähne axial außer Eingriff kommen. Die bekannte Nabe funktioniert an sich zufriedenstellend und wird im sportlichen und auch professionellen Bereich eingesetzt. Ein gewisser Nachteil ist allerdings, dass bei den hohen Belastungen der Nabe beispielsweise bei einer Bergauffahrt derartige Biegemomente an der Nabe auftreten können, dass eine leichte Verkippung einer Zahnscheibe auftreten kann, was zu einem größeren Verschleiß der stärker belasteten Zähne führt, sodass die Haltbarkeit begrenzt wird und die Zahnscheiben früh genug ausgetauscht werden müssen, um eine Fehlfunktion zu vermeiden.

Die DE 10 2010 033 268 A1 offenbart eine Nabe, bei der zwei Bauteile mit Stirnverzahnungen einen Axialfreilauf bilden. Zwei jeweils benachbarte Nabenlager an den Enden des Nabengehäuses dienen zur Abstützung gegenüber der Nabenachse. Nachteilig ist der große Platzbedarf für die benachbarten Nabenlager. Außerdem verfügt die Nabenachse über keine radialen Absätze und kann deshalb nicht zur axialen Abstützung der Nabenbauteile dienen. Zur axialen Abstützung der Nabe wird deshalb an einer Seite die Axialkraft von einem Wälzlager in das Nabengehäuse übertragen und an der anderen Seite wieder durch ein Wälzlager über auf der Nabenachse angeordnete Hülsenelemente abgeleitet. In einer weiteren stark schematisch enthaltenen Ausführungsform sind ein oder zwei Nabenlager innen an dem Bauteil mit der Stirnverzahnung aufgenommen und in noch einer anderen stark schematisch dargestellten Ausführungsform ist einstückig an dem äußeren Laufring des Nabenlagers eine Stirnverzahnung des Axialfreilaufs ausgebildet, wodurch bei Einsatz nur eines Nabenlagers axialer Bauraum eingespart werden kann. Nachteilig ist aber, dass auch hier die Axialkräfte durch das Lager radial in das Nabengehäuse übertragen werden müssen. Ein Freilauf muss für Drehmomentbelastungen von 400 Nm und mehr ausgelegt sein. Das bedeutet, dass im Laufe der Betriebszeit das in das Nabengehäuse eingeschraubte Bauteil mit der Stirnverzahnung immer stärker in das Nabengehäuse gedrängt wird und das Nabengehäuse dort komprimiert. Die hohen Belastungen können zu einem Bruch des Nabengehäuses führen oder aber die Wandstärken müssen entsprechend verstärkt werden, was aber das Gewicht erhöht.

Es sind auch Naben mit Zahnscheibenfreiläufen bekannt geworden, die über einen Freilauf mit einer Axialverzahnung verfügen, wobei eine Axialverzahnung fest in dem Rotor integriert ist und eine Zahnscheibe über eine oder mehrere Federn drehfest und axial verschiebbar in dem Nabengehäuse aufgenommen ist und in Richtung auf die Verzahnung in dem Rotor axial vorbelastet wird. Umgekehrt ist auch ein Nabe bekannt geworden, die einen Zahnscheibenfreilauf aufweist und bei der eine Zahnscheibe fest in das Nabengehäuse integriert ist und bei der die andere Zahnscheibe über eine Feder in Richtung auf das Nabengehäuse vorbelastet ist. Beide Nabentypen, bei denen jeweils nur eine Zahnscheibe axial beweglich ist, haben aufgrund der hohen Belastungen im sportlichen oder professionellen Radsport wieder den Nachteil, dass einige Zähne stärker belastet werden und schneller verschleißen, sodass ein frühzeitiger und regelmäßiger Austausch der Zahnscheiben, des Rotors oder sogar des Nabengehäuses empfehlenswert ist, um eine Fehlfunktion zu vermeiden.

Eine Alternative wäre es, eine Nabe mit einem Zahnscheibenfreilauf insgesamt durch Verwendung steiferer und somit schwererer Materialien oder durch den Einsatz größerer Wandstärken steifer auszugestalten, wodurch aber das Gewicht steigt. Da im sportlichen und professionellen Radsport allerdings jedes Gramm Gewicht zählt, wird dadurch nicht die gewünschte Lösung erzielt.

Mit der EP 1 121 255 B1 ist eine leichte Nabe mit einem Zahnscheibenfreilauf und einer zuverlässigen Funktion bekannt geworden, wobei eine gleichmäßigere Belastung der Zähne der Zahnscheiben erfolgt. Dazu werden bei dieser Nabe zwei Zahnscheiben eingesetzt, die jeweils axial beweglich sind und die jeweils über eine Feder axial von außen aufeinander zu gedrückt werden. Dadurch werden beide Zahnscheiben schwimmend gelagert und können sich bei z. B. Durchbiegungen der Nabe oder bei sonstigen Belastungen jeweils besser zueinander ausrichten, sodass für eine gleichmäßigere Abnutzung der Zahnscheiben und einen besonders zuverlässigen Betrieb gesorgt wird. Eine noch steifere Nabe ist aber wünschenswert.

Die DE 10 2012 016 945 A1 offenbart eine Nabe für Fahrräder, wobei ein Zahnscheibenfreilauf mit zwei Zahnscheiben vorgesehen ist, die über magnetische Kräfte oder eine Zugfeder aufeinander zu gezogen werden, um die Zahnscheiben in die Eingriffstellung vorzubelasten. Die rotorseitige Zahnscheibe wird drehfest und axial verschiebbar im Rotor geführt. Die Zahnscheibe im Nabengehäuse ist drehfest und axial verschiebbar in einem in das Nabengehäuse eingeschraubten Gewindering aufgenommen.

Vor dem Hintergrund des Standes der Technik, ist es deshalb die Aufgabe der vorliegenden Erfindung, eine Nabe zur Verfügung zu stellen, die ebenfalls leicht oder noch leichter ist und die womöglich noch steifer ausgestaltet ist.

Diese Aufgabe wird durch eine Nabe mit den Merkmalen des Anspruchs 1 gelöst. Bevorzugte Weiterbildungen der Erfindung sind Gegenstand der Unteransprüche. Weitere Vorteile und Merkmale der vorliegenden Erfindung ergeben sich aus der allgemeinen Beschreibung und der Beschreibung der Ausführungsbeispiele.

Eine erfindungsgemäße Nabe ist für wenigstens teilweise muskelbetriebene Fahrzeuge und insbesondere Fahrräder vorgesehen und umfasst ein Nabengehäuse, welches (insbesondere mit zwei an gegenüberliegenden Endbereichen des Nabengehäuses angeordneten Wälzlagern) gegenüber und insbesondere auf einer Nabenachse drehbar gelagert ist. Die Nabe weist einen mit wenigstens zwei Rotorlagern gegenüber und insbesondere auf der Nabenachse drehbar gelagerten und besonders bevorzugt in axialer Richtung im Betrieb fest bzw. axial unbeweglich angeordneten Rotor zur drehfesten Anordnung wenigstens eines Ritzels auf. Es ist eine Freilaufeinrichtung mit zwei miteinander zusammenwirkenden Freilaufkomponenten umfasst, nämlich einer nabenseitigen Freilaufkomponente und einer rotorseitigen Freilaufkomponente. Die beiden Freilaufkomponenten weisen jeweils axiale Eingriffselemente auf und sind in axialer Richtung relativ zueinander wenigstens zwischen einer Freilaufstellung und einer ineinander eingreifenden Eingriffsstellung bewegbar. In der nabenseitigen Freilaufkomponente sind Wälzkörper definiert aufgenommen, um das Nabengehäuse gegenüber der Nabenachse zu lagern. In dem Nabengehäuse sind (wenigstens) ein Befestigungsabschnitt und (wenigstens) ein Zentrierabschnitt ausgebildet. An der nabenseitigen Freilaufkomponente sind (wenigstens) ein Befestigungsbereich und (wenigstens) ein Zentrierbereich ausgebildet. Eine radiale Toleranz zwischen der nabenseitigen Freilaufkomponente und dem Nabengehäuse ist an dem Befestigungsabschnitt größer als an dem Zentrierabschnitt. Der Befestigungsbereich ist mit dem Befestigungsabschnitt verbunden und der Zentrierbereich wird an dem Zentrierabschnitt zentriert.

Mit der Formulierung, dass in der nabenseitigen Freilaufkomponente Wälzkörper definiert aufgenommen sind, wird im Sinne der vorliegenden Erfindung verstanden, dass die Wälzkörper mittelbar oder unmittelbar direkt in der nabenseitigen Freilaufkomponente definiert aufgenommen sind. "Definiert aufgenommen" bedeutet, dass die Position der Wälzkörper gegenüber der nabenseitigen Freilaufkomponente definiert ist. Beispielsweise kann ein mit Wälzkörpern ausgerüstetes Wälzlager in die nabenseitige Freilaufkomponente eingepresst oder eingesetzt und daran z.B. fixiert sein. Möglich ist es auch, dass die Wälzkörper direkt auf einer Oberfläche der nabenseitigen Freilaufkomponente definiert abrollen.

Die erfindungsgemäße Nabe hat viele Vorteile. Insbesondere ermöglicht die erfindungsgemäße Nabe einen leichten und steifen Aufbau. Ein erheblicher Vorteil besteht weiterhin in der definierten Aufnahme der nabenseitigen Freilaufkomponente in dem Nabengehäuse. Dadurch wird die Reproduzierbarkeit beim Aufbau eines Laufrades und beim Austausch von Komponenten der Nabe erheblich verbessert. Es hat sich bei Versuchen der Anmelderin mit Naben, bei denen der Lagersitz eines Wälzlagers an der Freilaufkomponente ausgebildet ist, herausgestellt, dass beim Austausch von Nabenkomponenten es zu nicht unerheblichen Zentrierfehlern des Laufrades kam. Bedenkt man, dass z. B. beim Einsatz von Felgenbremsen nur ein geringer Spalt zwischen dem Bremsbelag und der Bremsflanke vorliegt, kann ein solcher Zentrierfehler erhebliche Auswirkungen haben. Soll aus Wartungsgründen beispielsweise die nabenseitigen Freilaufkomponente oder ein darin definiert aufgenommenes oder eingepresstes Wälzlager ausgetauscht werden, so kann es erforderlich werden, das ganze Laufrad neu zu zentrieren. Eine erhebliche Ursache für derartige Zentrierfehler liegt z. B. bei in das Nabengehäuse eingeschraubten nabenseitigen Freilaufkomponenten daran, dass eine Schraubverbindung keine exakte Zentrierung gewährleistet. Die exakte radiale Position der nabenseitigen Freilaufkomponente hängt von den Fertigungstoleranzen im Allgemeinen und im Speziellen auch von der Fertigung und Art des Gewindes ab. So kann bei an sich gleichen nabenseitigen Freilaufkomponenten der Anfang des Gewindes aufgrund der Gewindesteigung leicht versetzt sein. Unter anderem das kann beim Einschrauben unterschiedlicher (aber an sich gleich gefertigter) nabenseitiger Freilaufkomponenten zu einem geringen radialen Versatz und einer gegebenenfalls etwas unterschiedlichen Orientierung führen. Aufgrund der radial unterschiedlichen Abmessungen von nabenseitiger Freilaufkomponente und Nabengehäuse können unterschiedliche radiale Positionen eingenommen werden, auch wenn die nabenseitige Freilaufkomponente z. B. fest in das Nabengehäuse eingeschraubt ist.

Derartige auch schon minimale Unterschiede werden aufgrund der unterschiedlichen Durchmesser von Nabe (bzw. nabenseitiger Freilaufkomponente) und Laufrad erheblich verstärkt und sorgen dort für entsprechend verstärkte Ausschläge, die zu einer ungenügenden Zentrierung eines Laufrades führen können, wenn z. B. im Inneren der Nabe Teile getauscht werden. Dann kann eine vollständige Neuzentrierung oder eine Demontage und anschließende neue Montage nötig werden.

Dafür bietet die Erfindung eine vorteilhafte Lösung, indem ein Befestigungsbereich der Freilaufkomponente mit dem Befestigungsabschnitt der Nabe verbunden wird und indem ein Zentrierbereich der Freilaufkomponente an dem Zentrierabschnitt der Nabe geführt oder zentriert wird. Die Abweichungen beim Aufbau und Austausch von Nabenteilen können dadurch erheblich reduziert werden.

Durch die Integration der Wälzkörper oder eines Wälzlagers in die nabenseitige Freilaufkomponente kann der seitliche axiale Abstand der Wälzlager zur Lagerung des Nabengehäuses erheblich größer gewählt werden, als bislang. Dadurch kann auch die Seitensteifigkeit eines damit ausgerüsteten Rades erheblich verbessert werden.

Besonders bevorzugt ist bzw. sind der Rotor und insbesondere auch das Nabengehäuse in der Freilaufstellung und in der Eingriffsstellung in den gleichen axialen Positionen angeordnet. In der Eingriffsstellung ist ein Antriebsdrehmoment in Antriebsdrehrichtung von dem Rotor auf das Nabengehäuse übertragbar. In der Freilaufstellung sind der Rotor und das Nabengehäuse vorzugsweise voneinander entkoppelt, wobei dann in der Freilaufstellung kein oder praktisch kein wesentliches Drehmoment zwischen Nabengehäuse und Rotor übertragen wird.

Die axialen Eingriffselemente stehen insbesondere axial hervor und/oder wirken in axialer Richtung.

Die nabenseitige Freilaufkomponente ist ein separates Teil und ist nicht einstückig mit dem Nabengehäuse ausgebildet, da ein Nabengehäuse meist aus einer oder mehreren Komponenten aus einem leichten Material oder aus mehreren leichten Materialien wie Leichtmetall oder Faserverbundwerkstoff besteht, während die Freilaufkomponente wenigstens zum Teil aus (wenigstens) einem festeren und somit meist schwereren Material gefertigt ist. Beispielsweise eignet sich Stahl als Material für die Freilaufkomponente.

Bei einem nacheinander erfolgenden Einbau von zwei Exemplaren nabenseitiger Freilaufkomponenten (z. B. bei einer Wartung) wird die radiale Positionierung durch den Zentrierabschnitt definiert und erfolgt weitestgehend gleich. Es wird bei unterschiedlichen Exemplaren eine gleiche radiale Positionierung erreicht. Unterschiede einer Ausrichtung oder bei der Zentrierung eines Laufrades werden so weitestgehend vermieden. Auch nach dem Austausch von nabenseitigen Freilaufkomponenten und/oder Wälzkörpern oder Wälzlagern kann ein Laufrad direkt benutzt werden und muss nicht erst nachzentriert oder sogar demontiert werden.

Die radiale Toleranz oder ein radiales Spiel ist zwischen der nabenseitigen Freilaufkomponente und dem Nabengehäuse an dem Befestigungsabschnitt größer als an dem Zentrierabschnitt. Unter einer radialen Toleranz wird hier auch ein Spiel verstanden. So können sich (ohne den Zentrierabschnitt) an dem Befestigungsabschnitt radial unterschiedliche Positionen ergeben, abhängig von den Toleranzen und von der Fertigung.

Im zusammengebauten Zustand liegt kein tatsächliches Spiel mehr vor, da die nabenseitige Freilaufkomponente fest mit dem Nabengehäuse verbunden ist. Die sich ergebende jeweilige tatsächliche radiale Positionierung hängt aber von den vorhandenen Toleranzen bzw. dem Spiel vor dem Einbau ab. Je nach Montage und verwendeter Komponente (innerhalb der zulässigen Herstellungstoleranzen) kann sich eine unterschiedliche radiale Positionierung ergeben, die zwar absolut nur geringfügig schwankt, sich aber durch die Hebelwirkung erheblich verstärkt auswirkt.

In bevorzugten Ausgestaltungen ist die radiale Toleranz (das radiale Spiel) zwischen der nabenseitigen Freilaufkomponente und dem Nabengehäuse an dem Zentrierabschnitt weniger als halb so groß wie an dem Befestigungsabschnitt. Insbesondere ist die radiale Toleranz an dem Zentrierabschnitt kleiner als 1/4 der radialen Toleranz an dem Befestigungsabschnitt.

In bevorzugten Weiterbildungen liegt an dem Zentrierabschnitt eine Spielpassung mit weniger als 20 µm radialer Toleranz oder Spiel und insbesondere einer radialen Toleranz kleiner als 10 µm und vorzugsweise kleiner 5 µm oder sogar kleiner 3 µm vor.

In besonders bevorzugten Ausgestaltungen wird an dem Zentrierabschnitt und dem Zentrierbereich eine Übergangspassung ausgebildet. Das bedeutet, dass je nach aktueller Fertigung eine leichte Spielpassung oder eine leichte Presspassung vorliegen kann. Je nach tatsächlicher Abmessungen kann ein geringes Untermaß oder Übermaß vorliegen.

Unter einem "Zentrierbereich" und einem "Befestigungsbereich" werden gegenständliche Abschnitte oder Teile eines Körpers verstanden.

In weiteren bevorzugten Ausgestaltungen ist an dem Zentrierabschnitt und dem Zentrierbereich eine Presspassung oder eine Übermaßpassung ausgebildet. Dabei ist das innere Teil immer größer als das äußere Teil. Bei der Montage wird das äußere Teil (hier in der Regel das Nabengehäuse) leicht gedehnt. Bevorzugterweise liegt ein Übermaß im Bereich zwischen 0 µm und etwa 20 pm, insbesondere bei etwa 5 µm +/-5 µm.

Bi einer Presspassung (und auch bei einer Übergangspassung) kann eine exakt definierte Orientierung der nabenseitigen Freilaufkomponente und damit auch des Wälzlagers bzw. der Wälzkörper erreicht werden. Auch nach einer Demontage und anschließender Wiedermontage der Nabe mit gleichen oder ausgetauschten Komponenten ist eine Nacharbeit bei der Zentrierung nicht nötig. Es wird insbesondere bei einem Komponentenaustausch vermieden, dass sich die Felge um mehrere zehntel oder gegebenenfalls auch nur 1/10 oder 2/10 Millimeter axial verschiebt.

In besonders bevorzugten Ausgestaltungen verfügen der Befestigungsabschnitt und der Befestigungsbereich jeweils über Gewinde, welche miteinander verschraubt sind. Vorzugsweise verfügt der Befestigungsbereich über ein Außengewinde, welcher in ein Innengewinde an dem Befestigungsabschnitt des Nabengehäuses eingeschraubt ist. Es ist aber auch möglich, dass die Freilaufkomponente mit einem Innengewinde auf einen Stummel des Nabengehäuses aufgeschraubt ist.

In allen Ausgestaltungen ist es bevorzugt, dass die nabenseitige Freilaufkomponente einen axialen Körperabschnitt umfasst.

In bevorzugten Weiterbildungen weist der Befestigungsbereich einen größeren Außendurchmesser auf als der Zentrierbereich. Insbesondere auch bei einer solchen Ausgestaltung ist es möglich und bevorzugt, dass die nabenseitige Freilaufkomponente einen nach außen ragenden Fortsatz umfasst, der sich von dem axialen Körperabschnitt aus (radial oder auch schräg) nach außen erstreckt. Der Zentrierbereich ist dann vorzugsweise (radial außen) an dem Fortsatz ausgebildet.

Insbesondere ist dann an der axialen Innenseite des Fortsatzes ein Anschlag ausgebildet ist, der im montierten Zustand an einem radialen Absatz des Nabengehäuses anliegt.

Möglich ist es auch, dass an einer Stirnseite des axialen Körperabschnitts ein Anschlag ausgebildet ist, der im montierten Zustand an einem radialen Absatz des Nabengehäuses anliegt.

Ein bedeutender Vorteil solcher Ausgestaltungen mit einem Anschlag besteht darin, dass die nabenseitige Freilaufkomponente im bestimmungsgemäßen Zusammenbau an einem radialen Absatz des Nabengehäuses anliegt. Dadurch wird auch bei einem Einschrauben der nabenseitige Freilaufkomponente eine ausreichend stabile Abstützung im Nabengehäuse erzielt. Bei einer solchen Gestaltung wird zuverlässig verhindert, dass sich die nabenseitige Freilaufkomponente im Betrieb immer weiter in das Nabengehäuse hineinzieht.

Die nabenseitige Freilaufkomponente umfasst insbesondere einen sich von dem axialen Körperabschnitt aus nach innen erstreckenden Ringflansch. An der axialen Außenseite des Ringflansches sind vorzugsweise die Eingriffselemente insbesondere in Form einer Axialverzahnung ausgebildet.

In vorteilhaften Weiterbildungen umfasst die nabenseitige Freilaufkomponente den axialen Körperabschnitt mit einem inneren zentrischen Aufnahmeraum und einem daran ausgebildeten Lagersitz und einem daran aufgenommenen Wälzlager zur drehbaren Lagerung des Nabengehäuses. Das Wälzlager umfasst dabei Wälzkörper. Alternativ ist es auch möglich, dass der Außenring des Lagers direkt in der nabenseitigen Freilaufkomponente bzw. innen an dem axialen Körperabschnitt ausgebildet ist. Eine innere Umfangsfläche der nabenseitigen Freilaufkomponente bildet dann den Außenring des Wälzlagers und somit die Lauffläche.Dadurch dass die nabenseitige Freilaufkomponente einen Lagersitz bildet, an dem ein Wälzlager zur drehbaren Lagerung des Nabengehäuses definiert aufgenommen ist, kann der seitliche Abstand der Lager zur Lagerung des Nabengehäuses gegenüber der Nabenachse um einige Millimeter vergrößert werden. Schon dadurch wird eine erheblich höhere Steifigkeit der Nabe erzielt. Ein beim Treten wirksames Biegemoment wird erheblich verringert. Der seitliche axiale Abstand zwischen der Kraftangriffsfläche zur Übertragung des Antriebsmoments und der Lagerstelle ist erheblich geringer als im Stand der Technik, da das Wälzlager radial innerhalb der nabenseitigen Freilaufkomponente aufgenommen ist. Der Abstand kann sogar halbiert werden. Außerdem wird der seitliche axiale Abstand der Wälzlager des Nabengehäuses deutlich vergrößert. Die Wälzlager zur Lagerung des Nabengehäuses gegenüber der Nabenachse können auch als Nabengehäuselager bezeichnet werden. Gleichzeitig kann durch den nach außen ragenden Fortsatz an der nabenseitigen Freilaufkomponente, der im Betrieb an einem Absatz im Nabengehäuse definiert anliegt, eine besonders stabile und zuverlässige Nabe zur Verfügung gestellt werden.

Ein weiterer Vorteil ist, dass auch der Abstand der beiden Rotorlager zueinander vergrößert werden kann, sodass auch dort eine größere Steifigkeit erzielt wird. Sehr vorteilhaft ist auch, dass die Nabe noch einfacher aufgebaut ist. Es ist nicht nötig, die Nabenachse zur Erhöhung der Steifigkeit zu verdicken.

Gleichzeitig kann mit der Erfindung die Nabe insgesamt deutlich leichter aufgebaut werden und diese dazu noch eine größere Steifigkeit aufweisen. Ein Gewichtsvorteil wird dadurch erzielt, dass die nabenseitige Freilaufkomponente leichter ausgestaltet wird. Ein weiterer Gewichtsvorteil wird dadurch erzielt, dass das Nabengehäuse bzw. die Nabenhülse dünnwandiger ausgebildet werden kann. Beim bekannten Stand der Technik umgibt das Nabengehäuse das Wälzlager und die benachbart dazu in dem Nabengehäuse aufgenommene Zahnscheibe. Zur Sicherstellung der nötigen Stabilität darf eine minimale Wandstärke des Nabengehäuses aber nicht unterschritten werden. Das führt dazu, dass beim bekannten Stand der Technik das Nabengehäuse über einen deutlich größeren axialen Bereich eine erheblich größere Wandstärke aufweisen muss, als dies bei der vorliegenden Erfindung der Fall ist. Mit der Erfindung wird also eine größere Steifigkeit bei einem kleineren Gewicht erreicht. Zusätzlich werden auch noch weniger Teile benötigt, sodass der Aufbau und die Montage und die Wartung einfacher werden. Durch den radial nach außen ragenden Fortsatz wird außerdem der Anpressdruck der nabenseitigen Freilaufkomponente in dem Nabengehäuse auf einen größeren Durchmesser verteilt und somit wird eine kleinere Flächenpressung erreicht. Durch den radial nach außen ragenden Fortsatz wird verhindert, dass sich die nabenseitige Freilaufkomponente stärker in das Nabengehäuse hineinzieht, wenn sie mit einem Außengewinde versehen ist und in das Nabengehäuse eingeschraubt ist.

Mit der Erfindung wird axialer Bauraum eingespart. Sowohl das Nabengehäuse als auch der Rotor können jeweils axial breiter abgestützt werden, als es bei dem aus der EP 1 121 255 B1 bekannten Stand der Technik der Fall war.

Bei der Erfindung weist die nabenseitige Freilaufkomponente einen inneren und zentrischen Aufnahmeraum mit einem Lagersitz und einem daran aufgenommenen Wälzlager zur drehbaren Lagerung des Nabengehäuses auf, um die Nabe zu versteifen. Mit der Erfindung wird eine Erhöhung eines axialen Abstandes der Wälzlager des Nabengehäuses ermöglicht. Das Nabengehäuse kann insgesamt deutlich breiter abgestützt werden, wodurch die Seitensteifigkeit eines damit ausgerüsteten Rades erheblich verbessert werden kann.

In einer bevorzugten Weiterbildung werden die beiden Freilaufkomponenten über wenigstens eine Vorbelastungseinrichtung in die Eingriffsstellung vorbelastet. Die Freilaufkomponenten weisen vorzugsweise jeweils stirnseitig ausgebildete Eingriffselemente auf, welche in der Eingriffsstellung ineinander eingreifen. Dadurch übertragen die Eingriffselemente in der Eingriffsstellung eine Drehbewegung in Antriebsrichtung von dem Rotor auf das Nabengehäuse. In der Freilaufstellung ist eine Relativdrehung der Freilaufkomponenten zueinander und damit auch des Nabengehäuses zu dem Rotor möglich.

In allen Ausgestaltungen ist es bevorzugt, dass die Freilaufkomponenten jeweils eine Axialverzahnung aufweisen. Die Freilaufeinrichtung ist insbesondere als Zahnscheibenfreilauf ausgebildet. Als Eingriffselemente dienen dann vorzugsweise Axialzähne, die insbesondere über wenigstens eine Feder oder eine Mehrzahl von Federn oder Federelementen in die Eingriffsstellung vorbelastet werden. Insbesondere beträgt die Anzahl der Eingriffselemente an jeder Freilaufkomponente zwischen 16 und 80 und insbesondere zwischen 18 und 72. Damit wird ein sehr schnelles Ansprechen ermöglicht.

Vorzugsweise ist die rotorseitige Freilaufkomponente drehfest und axial beweglich an dem Rotor aufgenommen und die nabenseitige Freilaufkomponente ist drehfest und insbesondere auch axial fest mit dem Nabengehäuse gekoppelt. Insbesondere ist die rotorseitige Freilaufkomponente als Zahnscheibe ausgebildet oder umfasst eine solche und ist stirnseitig mit einer Axialverzahnung versehen.

In bevorzugten Weiterbildungen und Ausgestaltungen ist der axiale Körperabschnitt der nabenseitigen Freilaufkomponente bzw. wenigstens ein Teil des axialen Körperabschnitts rohrförmig ausgestaltet und kann als rohrförmiger Körperabschnitt bezeichnet werden. In bevorzugten Ausgestaltungen weist der axiale oder rohrförmige Körperabschnitt einen runden Außenquerschnitt auf. Insbesondere ist dann an dem runden Außenquerschnitt ein Außengewinde vorgesehen, mit welchem der axiale (rohrförmige) Körperabschnitt im montierten Zustand vorzugsweise in ein Innengewinde des Nabengehäuses eingeschraubt ist. Dann ist der axiale (rohrförmige) Körperabschnitt axial fest und drehfest mit dem Nabengehäuse verbunden. Der rohrförmige Körperabschnitt ist vorzugsweise im Wesentlichen zylindrisch ausgebildet.

In bevorzugten Weiterbildungen ist der axiale Körperabschnitt derart ausgestaltet, dass der axiale Körperabschnitt mit dem nach außen ragenden Fortsatz und dem nach innen ragenden Ringflansch einen (wenigstens im Wesentlichen) T-förmigen Querschnitt aufweist. Möglich ist auch ein S- oder Z-förmiger Querschnitt. Vorzugsweise sind bei einem T-förmigen Querschnitt der Querstrich des "T" und somit der Ringflansch und der Fortsatz axial außen angeordnet, während der axiale oder rohrförmige Körperabschnitt sich weiter nach innen in das Nabengehäuse bzw. in die Nabe hinein erstrecken. Eine solche Ausgestaltung und ein solcher z. B. T-förmiger Querschnitt erlaubt eine kompakte Bauweise und eine hohe Belastbarkeit. Die (in Bezug auf die Nabe) axiale Außenseite des Ringflansches ist mit den Eingriffselementen ausgerüstet. Die (in Bezug auf die Nabe) axiale Innenseite des Fortsatzes stellt einen Anschlag zur Verfügung, der (im montierten Zustand) an dem radialen Absatz in dem Nabengehäuse anliegt. Dadurch wird ein großes Materialvolumen in dem Nabengehäuse zur Verfügung gestellt, über welches die auf das Nabengehäuse wirkenden Kräfte zuverlässig übertragen werden, wodurch bei leichtem Gewicht eine stabile Nabe zur Verfügung gestellt werden kann.

Es ist aber auch möglich und bevorzugt, dass der axiale oder rohrförmige Körperabschnitt einen unrunden Außenquerschnitt aufweist. Beispielsweise kann der axiale Körperabschnitt einen mehreckigen Außenquerschnitt aufweisen. Der (unrunde) Außenquerschnitt des axialen Körperabschnitts ist dann insbesondere angepasst an einen entsprechenden unrunden Innenquerschnitt des Nabengehäuses. Möglich sind auch zahnartige Strukturen (Außen- und Innenverzahnung), wobei eine axiale Fixierung des axialen Körperabschnitts an dem Nabengehäuse bevorzugt ist. Die axiale Position kann sich auch über die axial definierte Positionierung des Innenrings des Nabengehäuselagers an oder in in der nabenseitigen Freilaufkomponente ergeben.

Möglich ist es auch, dass der axiale oder rohrförmige Körperabschnitt einen runden oder unrunden Außenquerschnitt umfasst und nicht über einen äußeren Umfangsformschluss drehfest mit dem Nabengehäuse gekoppelt ist. Beispielsweise können auch Kopplungsstifte oder Kopplungsschrauben vorgesehen sein, die die nabenseitige Freilaufkomponente drehfest und gegebenenfalls auch axial fest mit dem Nabengehäuse verbinden.

Der Lagersitz ist vorzugsweise an dem axialen und/oder rohrförmigen Körperabschnitt und dort insbesondere radial innen ausgebildet.

Die nabenseitige Freilaufkomponente weist in einem Radialschnitt einen vorzugsweise im Wesentlichen L-förmigen Querschnitt auf, wobei ein Schenkel des "L" den axialen oder rohrförmigen Körperabschnitt bildet und sich der andere Schenkel des L in radialer Richtung erstreckt und mit den Eingriffselementen ausgerüstet ist. Besonders bevorzugt liegt ein "T"-förmiger Querschnitt vor, bei dem sich der Ringflansch und der Fortsatz axial überlappen oder wenigstens etwa in der gleichen axialen Position befinden.

Vorzugsweise ist das Wälzlager in der nabenseitigen Freilaufkomponente mit mehr als 2/3 seiner axialen Breite aufgenommen. Insbesondere ist ein wesentlicher bzw. der wesentlichste Teil des Wälzlagers an dem Lagersitz der nabenseitigen Freilaufkomponente definiert aufgenommen. Vorzugsweise ist das Wälzlager mit mehr als 50 % und besonders bevorzugt mit mehr als 75 % seiner axialen Breite innerhalb der nabenseitigen Freilaufkomponente aufgenommen. In bevorzugten Ausgestaltungen ist das Wälzlager mit zwischen etwa 80 % und 90 % oder zwischen 80 % und 99,5 % und insbesondere 90 % und 99,5 % seiner axialen Breite an der nabenseitigen Freilaufkomponente aufgenommen. Vorzugsweise liegt ein (in axialer Richtung gesehen) lichter Abstand zwischen der axial inneren Stirnseite des axialen Körperabschnitts und dem Nabengehäuse vor. Der lichte Abstand bildet ein Spiel zwischen der axial inneren Stirnseite des axialen Körperabschnitts und dem Nabengehäuse und ist insbesondere größer als 0,02 mm und beträgt vorzugsweise zwischen 0,03 mm und 1,5 mm, insbesondere zwischen 0,05 mm und 0,6 mm und vorzugsweise zwischen 0,08 mm und 0,35 mm. In bevorzugten Ausgestaltungen beträgt der lichte Abstand zwischen 0,5 % und 5 % der axialen Länge des an der nabenseitigen Freilaufkomponente aufgenommenen Wälzlagers. Der lichte Abstand sorgt dafür, dass der radial nach außen ragende Fortsatz die axiale Position des axialen Körperabschnitts definiert und ein sich immer stärkeres Einschrauben des axialen Körperabschnitts verhindert wird. Der radial nach außen ragenden Fortsatz der nabenseitigen Freilaufkomponente steht radial insbesondere über den axialen Körperabschnitt nach außen über und liegt im montierten Zustand an dem radialen Absatz des Nabengehäuses an. Dadurch wird eine axial definierte Position der nabenseitigen Freilaufkomponente erreicht. Der nach außen ragende Fortsatz kann als singulärer Fortsatz ausgebildet sein oder es sind mehrere Fortsätze (symmetrisch) über dem Umfang verteilt vorgesehen. Der Fortsatz kann auch als umlaufender Flansch ausgebildet sein, der sich insbesondere von dem axial äußeren Ende des axialen Körperabschnitts aus radial nach außen erstreckt.

Die nabenseitige Freilaufkomponente umfasst einen Ringflansch, an dem stirnseitig die Eingriffselemente (axial außen) ausgebildet sind. Der Ringflansch erstreckt sich insbesondere am axial äußeren Ende des axialen Körperabschnitts radial nach innen hin. Dann bildet der Ringflansch den radialen und nach innen ragenden Schenkel des T oder eines L, wie es zuvor beschrieben wurde.

Vorzugsweise ist in dem Nabengehäuse ein radialer Lagerabsatz zur definierten axialen Ausrichtung des in der nabenseitigen Freilaufkomponente aufgenommenen Wälzlagers ausgebildet. Insbesondere wird das Wälzlager zwischen dem radialen Lagerabsatz in dem Nabengehäuse und dem Ringflansch axial definiert positioniert. Vorzugsweise ist auf einer axialen Seite ein definiertes Spiel vorgesehen und auf der anderen axialen Seite ist das Wälzlager spielfrei angeordnet. Eine nachteilige Überbestimmung wird dadurch verhindert. Zwischen dem in der nabenseitigen Freilaufkomponente aufgenommenen Wälzlager und der axialen Innenseite des Ringflansches ist vorzugsweise ein freier Abstand ausgebildet. Der freie Abstand stellt ein axiales Spiel zur Verfügung. Insbesondere ist der freie Abstand größer als 0,02 mm oder 0,05 mm. Vorzugsweise ist der freie Abstand größer als 0,1 mm oder größer 0,2 mm und kann 0,5 mm oder 1 mm erreichen und übersteigen. Der freie Abstand liegt insbesondere zwischen der axialen Innenseite des Ringflansches und dem Außenring des freilaufseitigen Wälzlagers für das Nabengehäuse vor. In einer bevorzugten Ausgestaltung beträgt der freie Abstand zwischen 0,02 mm und 0,35 mm.

Der Außenring des freilaufseitigen Wälzlagers des Nabengehäuses liegt insbesondere mit dem axial weiter innen angeordneten Ende an dem radialen Lagerabsatz in dem Nabengehäuse an, um das Wälzlager definiert auszurichten. Besonders bevorzugt liegt ein (in axialer Richtung gesehen) lichter Abstand zwischen der axial inneren Stirnseite des axialen Körperabschnitts und dem Nabengehäuse vor und es ist zwischen dem in der nabenseitigen Freilaufkomponente aufgenommenen Wälzlager und der axialen Innenseite des Ringflansches ein freier Abstand ausgebildet. Vorzugsweise sind der lichte Abstand und der freie Abstand etwa gleich groß. Aufgrund vorhandener Toleranzen von Bauteilteilen und Fertigungs- und Montagetoleranzen können der lichte Abstand und der freie Abstand auch unterschiedlich groß ausgebildet sein. Der lichte Abstand und der freie Abstand verhindern jeweils eine Überbestimmung bei der montierten Nabe.

In vorteilhaften Ausgestaltungen ist die Vorbelastungseinrichtung in der rotorseitigen Freilaufkomponente aufgenommen. Insbesondere wird die Vorbelastungseinrichtung im Wesentlichen vollständig und besonders bevorzugt vollständig innerhalb der rotorseitigen Freilaufkomponente aufgenommen. Das bietet erhebliche axiale Bauraumvorteile, da die rotorseitige Freilaufkomponente in axialer Richtung nicht oder nur sehr wenig aufbaut, sodass axialer Bauraum eingespart werden kann. Dadurch kann die Steifigkeit der Nabe nochmals erhöht werden.

Insbesondere umfasst die rotorseitige Freilaufkomponente einen insbesondere zylindrischen Führungsabschnitt mit einer unrunden Außenkontur, welcher mit einer angepassten unrunden Innenkontur in dem Rotor kämmt, um eine axiale Bewegbarkeit der rotorseitigen Freilaufkomponente relativ zu dem Rotor zu ermöglichen, und um die drehfeste Kopplung zwischen dem Rotor und der rotorseitigen Freilaufkomponente bereitzustellen.

In bevorzugten Ausgestaltungen ist das stirnseitige Ende der rotorseitigen Freilaufkomponente als Ringscheibe mit den daran (stirnseitig) angeordneten Eingriffselementen ausgebildet.

Vorzugsweise weist die rotorseitige Freilaufkomponente mit dem Führungsabschnitt und der am stirnseitigen Ende angeordneten Ringscheibe einen in radialer Richtung etwa L-förmigen Querschnitt auf. Ein axial ausgerichteter Schenkel wird durch den Führungsabschnitt gebildet. Ein radial ausgerichteter Schenkel wird durch die stirnseitige Ringscheibe gebildet.

Vorzugsweise drückt die Vorbelastungseinrichtung die stirnseitige Ringscheibe mit den Eingriffselementen in Richtung der nabenseitigen Freilaufkomponente. Dabei liegt die Vorbelastungseinrichtung vorzugsweise innen an der Ringscheibe an.

Die Ringscheibe und der (zylindrische) Führungsabschnitt bilden vorzugsweise im Wesentlichen die rotorseitige Freilaufkomponente. Der Führungsabschnitt und die Ringscheibe sind besonders bevorzugt einstückig gefertigt.

Besonders bevorzugt stützt sich die Vorbelastungseinrichtung axial nach außen (unmittelbar) an einem Rotorlager zur drehbaren Lagerung des Rotors ab. Dabei stützt sich die Vorbelastungseinrichtung besonders bevorzugt direkt und unmittelbar an einem äußeren Lagerring des Rotorlagers ab.

In allen Ausgestaltungen sind die Lager zur Lagerung des Nabengehäuses und die Rotorlager zur Lagerung des Rotors vorzugsweise als Wälzlager und insbesondere als Rillenkugellager ausgeführt, die einen äußeren Lagerring (auch Außenring genannt), einen inneren Lagerring (auch Innenring genannt) und dazwischen insbesondere in einem Wälzkörperkäfig angeordnete Wälzkörper aufweisen.

Die Vorbelastungseinrichtung kann sich auch mittelbar an einem Rotorlager abstützen, wenn beispielsweise eine Scheibe zwischen dem Rotorlager und der Vorbelastungseinrichtung angeordnet wird. Einen besonders platzsparenden Aufbau ermöglicht die unmittelbare Abstützung der Vorbelastungseinrichtung an dem Rotorlager, jedenfalls, wenn die Vorbelastungseinrichtung als zylindrische Spiralfeder ausgebildet ist. In anderen Ausgestaltungen ist es auch möglich, mehrere einzelne Federn einzusetzen, die sich dann jeweils außen an dem Rotorlager oder an anderen Komponenten abstützen.

Vorzugsweise ist zwischen dem Rotor und dem Nabengehäuse eine Dichteinrichtung vorgesehen. Die Dichteinrichtung weist insbesondere einen berührungsfreien Labyrinthspalt auf, der wenigstens einmal umgelenkt wird. Des Weiteren umfasst die Dichteinrichtung vorzugsweise wenigstens eine berührende Dichtlippe, die insbesondere dem Labyrinthspalt nachgeordnet ist.

Die Dichteinrichtung verhindert insbesondere den Zutritt von Wasser und Staub zu der Freilaufeinrichtung möglichst weitgehend und insbesondere weitestgehend. Die Dichtlippe ist dabei vorzugsweise radial weiter innen als der Labyrinthspalt vorgesehen.

In allen Ausgestaltungen ist es besonders bevorzugt, dass der Rotor und vorzugsweise die Nabe weitgehend oder vollständig werkzeugfrei demontierbar ist bzw. sind. Das Nabengehäuse ist vorzugsweise gesteckt, die Endanschläge sind insbesondere angesteckt (eingesteckt oder vorzugsweise aufgesteckt) und die Nabe ist - gegebenenfalls abgesehen von der nabenseitigen Freilaufkomponente - vorzugsweise vollständig werkzeugfrei demontierbar. Auch die nabenseitige Freilaufkomponente kann werkzeugfrei demontierbar sein. Das erleichtert die Montage und die Demontage und damit auch eine Wartung oder Reparatur.

Vorzugsweise wird im montierten Zustand eine Einspannkraft der Nabe über die Innenringe der Wälzlager des Nabengehäuses und die Innenringe der Rotorlager abgestützt. Insbesondere ist zwischen dem freilaufseitigen Wälzlager des Nabengehäuses und dem freilaufseitigen Rotorlager und zwischen den beiden Rotorlagern jeweils wenigstens ein Hülsenkörper zur formschlüssigen Kraftübertragung der Einspannkraft angeordnet. Dadurch wird eine formschlüssige und besonders stabile Nabe bereitgestellt.

Vorzugsweise sind auf der Nabenachse zwei und insbesondere genau zwei radiale Verdickungen ausgebildet. Die zwei radialen Verdickungen sind vorzugsweise im Bereich der Wälzlager zur Lagerung des Nabengehäuses ausgebildet. Vorzugsweise weisen die radialen Verdickungen auf der axial nach innen gerichteten Seite einen (kontinuierlichen oder graduellen oder stufenlosen oder gestuften) Anstieg der Wandstärke auf und an der axial äußeren Seite ist jeweils ein Absatz ausgebildet. Diese Absätze können als Anschlag für die innere Lagerschale der Wälzlager zur Lagerung des Nabengehäuses dienen. Gegebenenfalls kann zwischen den Anschlag und das Wälzlager ein Abstandshalter wie eine Scheibe oder eine Hülse eingebracht werden. In allen diesen Ausgestaltungen kann Kraft über die Nabenachse und die Abstandshalter wie Scheiben, Hülsenkörpern und inneren Lagerschalen der Wälzlager übertragen werden.

Besonders bevorzugt ist die Nabenachse zylindrisch ausgestaltet und weist abgesehen von den radialen Verdickungen, an denen die Wälzlager zur Lagerung des Nabengehäuses anliegen, einen im Wesentlichen konstanten Durchmesser und eine im wesentliche konstante Wandstärke auf, wobei der Durchmesser und die Wandstärke sich um weniger als 25% und vorzugsweise um weniger als 15% ändern. Im Inneren ist die Nabenachse besonders bevorzugt zylindrisch ausgebildet.

Vorzugsweise liegen die an den gegenüberliegenden Endbereichen des Nabengehäuses angeordneten Wälzlager jeweils mit ihrem Innenring axial nach innen hin an radialen Verdickungen der Nabenachse an. Dadurch wird die Nabenachse zur formschlüssigen Kraftübertragung eingesetzt.

Besonders bevorzugt ist wenigstens eines der Wälzlager und/oder der Rotorlager als Rillenkugellager ausgebildet und insbesondere als handelsübliches und/oder normiertes Rillenkugellager ausgebildet. Wenigstens eines der Wälzlager und/oder der Rotorlager verfügt vorzugsweise über einen Wälzkörperkäfig und/oder über Lagerdichtungen, die direkt an dem Wälzlager angebracht sind und den Eintritt von Wasser und/oder Staub zum Inneren des Wälzlagers verhindern.

In allen Ausgestaltungen ist es bevorzugt, dass die Nabe für den Einsatz einer Steckachse ausgebildet ist. Vorzugsweise umfasst die Nabe eine Steckachse.

Es ist bevorzugt, dass Endanschläge vorgesehen sind, die auf die Achse bzw. Nabenachse aufgeschoben oder in die Nabenachse eingeschoben werden. Es ist möglich, austauschbare Endanschläge zur Verfügung zu stellen, wobei ein Satz von Endanschlägen zur Aufnahme einer Steckachse ausgebildet ist und wobei ein anderer Satz von Endanschlägen zur Aufnahme beispielsweise eines Schnellspanners vorgesehen ist. Der letztere Satz von Endanschlägen weist axial nach außen hin zylindrische Ansätze auf, die zur Aufnahme in den Ausfallenden eines Rahmens ausgebildet sind und die vorzugsweise einen kleineren Außendurchmesser aufweisen als ein Innendurchmesser der Nabenachse in einem zentralen Bereich der Nabenachse. Werden zwei Sätze von Endanschlägen mit der Nabe ausgeliefert, kann sich der Benutzer entscheiden, ob er sie mit der Steckachse oder mit einem Schnellspanner verwenden will. Auch eine nachträgliche Umrüstung ist möglich.

In allen Ausgestaltungen können auch mehr als zwei Wälzlager zur Lagerung des Nabengehäuses vorgesehen sein. Jedenfalls wird dann jeweils (wenigstens) ein Wälzlager an den beiden Endbereichen angeordnet. Ebenso können auch mehr als zwei Rotorlager eingesetzt werden.

Weitere Vorteile und Merkmale der vorliegenden Erfindung ergeben sich aus den Ausführungsbeispielen, welche im Folgenden mit Bezug auf die beiliegenden Figuren erläutert werden.

In den Figuren zeigen:
- Figur 1: eine schematische Darstellung eines Mountainbikes;
- Figur 2: eine schematische Darstellung eines Rennrades;
- Figur 3: einen Schnitt durch eine erfindungsgemäße Nabe;
- Figur 4: ein vergrößertes Detail des Schnittes aus Figur 3;
- Figur 5: eine perspektivische Darstellung der nabenseitigen Freilaufkomponente;
- Figur 6: einen Schnitt durch die nabenseitige Freilaufkomponente nach Figur 5;
- Figur 7: eine Explosionsdarstellung der Nabe nach Figur 3;
- Figur 8: einen Schnitt durch eine weitere erfindungsgemäße Nabe;
- Figur 9: eine perspektivische Darstellung der nabenseitigen Freilaufkomponente der Nabe nach Figur 8;
- Figur 10: einen Schnitt durch die nabenseitige Freilaufkomponente nach Figur 9;
- Figur 11: einen Schnitt durch noch eine erfindungsgemäße Nabe;
- Figur 12: ein vergrößertes Detail aus Figur 11;
- Figur 13: eine schematische Prinzipskizze eines Details aus Figur 12;
- Figur 14: einen Schnitt durch ein andere erfindungsgemäße Nabe;
- Figur 15: ein vergrößertes Detail aus Figur 14;
- Figur 16: eine schematische Prinzipskizze eines Details aus Figur 15.

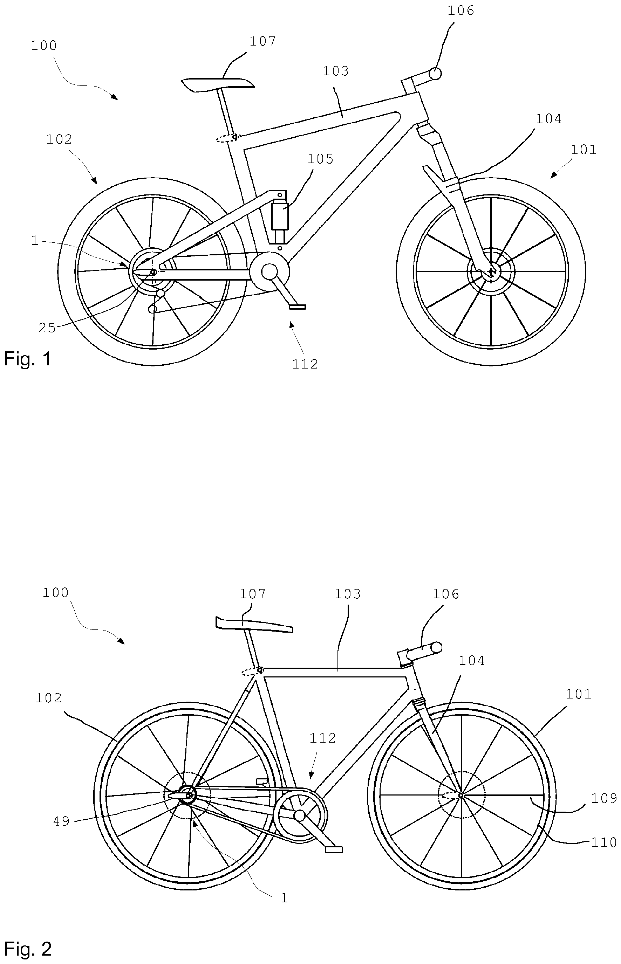

In den Figuren 1 und 2 sind jeweils ein Mountainbike bzw. ein Rennrad 100 dargestellt, die jeweils mit einer erfindungsgemäßen Nabe 1 ausgerüstet sind. Das Mountainbike bzw. Rennrad 100 verfügt jeweils über ein Vorderrad 101 und ein Hinterrad 102. An dem Hinterrad 102 wird die erfindungsgemäße Nabe 1 eingesetzt. Die beiden Räder 101, 102 verfügen über Speichen 109 und eine Felge 110. Es können konventionelle Felgenbremsen oder auch andere Bremsen wie zum Beispiel Scheibenbremsen vorgesehen sein.

Ein Rad 100 verfügt über einen Rahmen 103, einen Lenker 106, einen Sattel 107, eine Gabel bzw. Federgabel 104 und im Falle des Mountainbikes kann ein Hinterraddämpfer 105 vorgesehen sein. Zum Antrieb dient eine Tretkurbel 112 mit Pedalen. Gegebenenfalls kann ein elektrischer Hilfsantrieb an der Tretkurbel 112 und/oder den Rädern vorgesehen sein. Die Nabe 1 der Räder kann jeweils über eine Steckachse 25 oder einen Schnellspanner 49 an dem Rahmen befestigt sein.

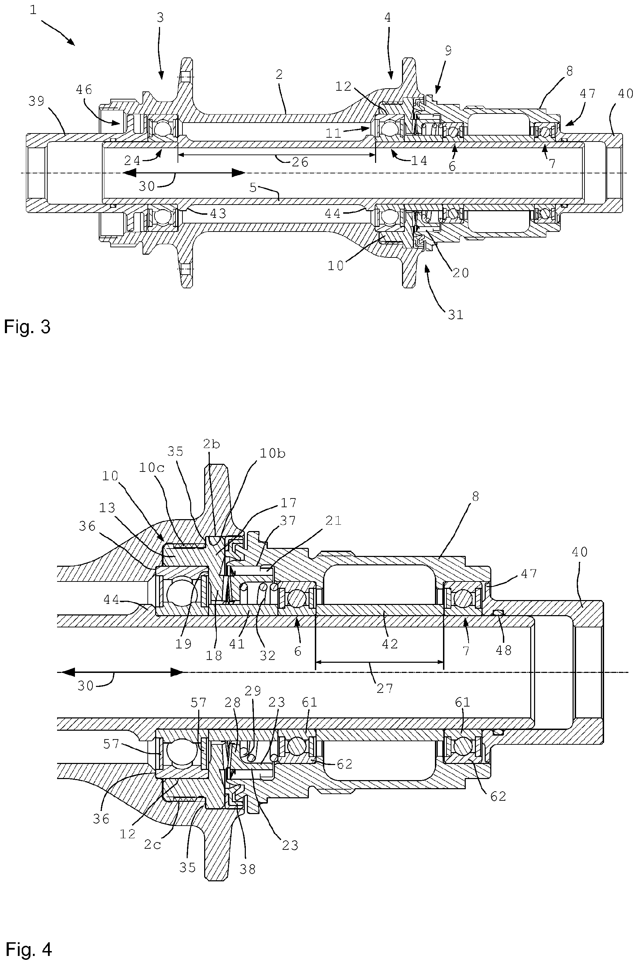

Die in den Fahrrädern gemäß Figur 1 und 2 jeweils am Hinterrad 102 eingesetzten Naben 1 zeigt Figur 3 in einem Schnitt.

Die erfindungsgemäße Nabe 1 umfasst ein Nabengehäuse 2, welches in den axialen Endbereichen 3 und 4 jeweils über Wälzlager 24 bzw. 14 drehbar gegenüber und hier unmittelbar drehbar auf einer Nabenachse 5 gelagert ist. Das bedeutet, dass die Wälzlager 14, 24 jeweils direkt auf der Nabenachse 5 angeordnet sind.

Die Nabe umfasst des Weiteren einen Rotor 8, an dem wenigstens ein Ritzel anzuordnen ist. Insbesondere kann dort ein Ritzelpaket aufgeschoben und befestigt bzw. angeordnet werden. Zwischen dem Rotor 8 und dem Nabengehäuse 2 ist eine Freilaufeinrichtung 9 vorgesehen, die die nabenseitige Freilaufkomponente 10 und die rotorseitige Freilaufkomponente 20 umfasst. Um den Eintritt von Wasser und Staub in das Innere der Nabe 1 und insbesondere um den Zutritt von Wasser und Staub zu der Freilaufeinrichtung 9 zu vermeiden, ist zwischen dem Rotor 8 und dem Nabengehäuse 2 eine Dichteinrichtung 38 ausgebildet, die hier einen labyrinthartigen Dichtspalt und eine nachgeschaltete Lippendichtung umfasst, die berührend an dem Rotor anliegt und den Freilauf zuverlässig vor dem Eintritt von Schmutz und Wasser schützt.

An den beiden Enden sind Endanschläge 39 bzw. 40 auf die Nabenachse aufgeschoben, die - wenn das damit ausgerüstete Laufrad nicht im Rahmen eingespannt ist - über O-Ringe 48 auf der Nabenachse gesichert werden. An den Endanschlägen 39 und 40 ist jeweils ein Dichtflansch 46 bzw. 47 vorgesehen, die die Enden der Nabe 1 vor dem Eintritt von Schmutz und Wasser schützen. Hier ist an dem rotorseitigen Endanschlag 40 ein radialer Dichtflansch 47 vorgesehen, während am anderen Endanschlag 39 ein Doppelflansch 46 ausgebildet ist, der aus zwei radialen Dichtflanschen besteht, zwischen denen ein axialer Abstand und Freiraum ausgebildet ist.

Die Wälzlager 14, 24 zur drehbaren Lagerung des Nabengehäuses 2 stützen sich an radialen Absätzen in Verdickungen 43, 44 der Nabenachse 5 ab. Die Verdickungen 43 und 44 befinden sich jeweils axial nach innen von den Lagern 14, 24.

In allen Ausgestaltungen der Nabe 1 ist an den Verdickungen 43, 44 die radiale Wandstärke der Nabenachse 5 vorzugsweise etwas größer. Insbesondere beträgt die radiale Wandstärke dort zwischen etwa dem l,5fachen und dem 3fachen der radialen Wandstärke in den anderen Bereichen. Abgesehen von den Verdickungen 43, 44 ist die Nabenachse 5 im Wesentlichen hohlzylindrisch ausgebildet und weist Unterschiede in der Wandstärke vorzugsweise kleiner 25% und insbesondere kleiner 15% oder kleiner 10% oder kleiner 5% oder kleiner 2% auf. Vorzugsweise ist ein Verhältnis von maximalem Außendurchmesser der Nabenachse (inkl. Verdickung) zu minimalem Innendurchmesser der Nabenachse kleiner als 2,0 und insbesondere kleiner als 1,75 und vorzugsweise kleiner als 1,6. Vorzugsweise ist das Verhältnis von maximalem Außendurchmesser der Nabenachse zu minimalem Innendurchmesser der Nabenachse größer als 1,25 und insbesondere größer als 1,4.

Der Rotor 8 wird über zwei Rotorlager 6 und 7 drehbar (und unmittelbar) auf der Achse 5 abgestützt.

Das Wälzlager 14 ist innerhalb der nabenseitigen Freilaufkomponente 10 aufgenommen und befindet sich dort in einem zentrischen Aufnahmeraum 11 definiert an einem Lagersitz 12. Dadurch kann erheblicher axialer Bauraum eingespart werden, wodurch die Stabilität und Steifigkeit der Nabe vergrößert werden kann. Außerdem wird das Gesamtgewicht der Nabe 1 erheblich reduziert. Sowohl das Gewicht der einzelnen Freilaufkomponenten als auch das Gewicht des Nabengehäuses können reduziert werden, da die Wandstärke in dem rotorseitigen Endbereich 4 des Nabengehäuses 2 reduziert werden kann.

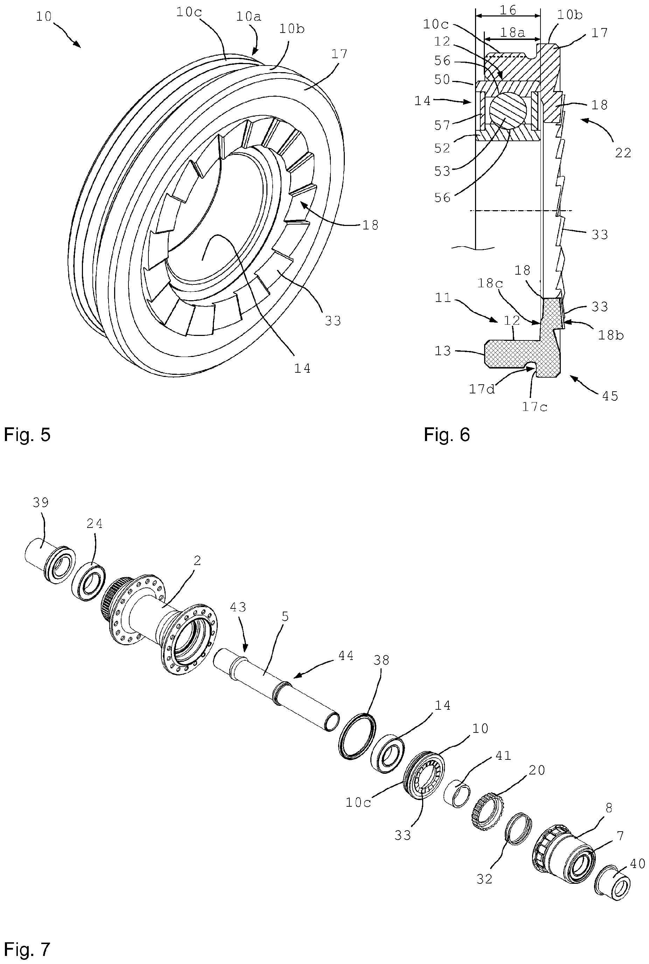

Figur 4 zeigt ein vergrößertes Detail aus Figur 3, wobei auch hier die Freilaufeinrichtung 9 in der Eingriffsstellung 31 dargestellt ist, in der die insbesondere als Axialverzahnungen 10d, 20d ausgebildeten Eingriffselemente 33 (vgl. Fig. 5) der Freilaufkomponente 10 und der Freilaufkomponente 20 im drehfesten Eingriff miteinander stehen. Die Eingriffselemente 33 sind dabei derart ausgestaltet (vergleiche zum Beispiel Figur 5), dass bei einer Drehrichtung in Antriebsrichtung zuverlässig ein Drehmoment auf das Nabengehäuse 2 übertragen wird, während bei einer entgegengesetzten Drehrichtung die Freilaufkomponente 20 axial gegen die Vorbelastungskraft der Vorbelastungseinrichtung 32 nach außen gedrückt wird, bis die Eingriffselemente 33 außer Eingriff geraten, sodass eine Relativdrehung von Rotor zu Nabengehäuse möglich ist. Die rotorseitige Freilaufkomponente 20 verfügt über einen Führungsabschnitt 23 mit einer unrunden Außenkontur 21. Die unrunde Außenkontur 21 kämmt mit einer angepassten unrunden Innenkontur 37 in dem Rotor 8 und ist parallel zur axialen Richtung 30 in dem Rotor 8 axial verschiebbar.

Die Freilaufkomponente 10 weist hier im radialen Querschnitt eine etwa T-förmige Ausgestaltung auf, bei der ein axialer Körperabschnitt 13 in einem Befestigungsbereich 10a mit einem Außengewinde 10c versehen ist, der in ein Innengewinde 2c an dem Befestigungsabschnitt 2a in dem Nabengehäuse eingeschraubt ist, sodass die Freilaufkomponente 10 axial fest und (in Antriebsrichtung) drehfest mit dem Nabengehäuse 2 verbunden ist.

Zur definierten radialen Positionierung der nabenseitigen Freilaufkomponente 10 und des darin aufgenommenen Wälzlagers 14 dient der Zentrierabschnitt 2b, in welchem der Zentrierbereich 10b der nabenseitigen Freilaufkomponente 10 passgenau aufgenommen ist. Insbesondere ist die Passung nahezu spielfrei. Es kann sich auch um eine Presspassung handeln, sodass die nabenseitige Freilaufkomponente 10 in das Nabengehäuse 2 (während des Einschraubens) eingepresst wird. Hier ist der Zentrierbereich 10b an dem ringförmigen Fortsatz 17 ausgebildet.

Radial innerhalb des axialen Körperabschnitts ist ein zylindrischer Lagersitz 12 ausgebildet, an dem das rotorseitige Wälzlager 14 zur drehbaren Lagerung des Nabengehäuses 2 aufgenommen ist. Das Wälzlager 14 wird im montierten Zustand in axialer Richtung mit seinem Innenring formschlüssig zwischen der Verdickung 44 und dem Hülsenkörper 41 aufgenommen.

Der Kraftschluss in axialer Richtung 30 erfolgt von dem Endanschlag 40 über den Innenring des Rotorlagers 7, den Hülsenkörper 42, den Innenring des Rotorlagers 6, den Hülsenkörper 41, den Innenring des Wälzlagers 14 und wird dann über die radiale Verdickung 44 in die Nabenachse 5 eingeleitet und von dort über die radiale Verdickung 43 auf den Innenring des Wälzlagers 24 übertragen, von wo die Einspannkraft über den Endanschlag 39 schließlich wieder abgeleitet wird.

Im montierten Zustand liegt der nach außen ragende und umlaufend ausgebildete Fortsatz 17 der nabenseitigen Freilaufkomponente 10 an einem radialen Absatz 35 innerhalb des Nabengehäuses 2 an. Die Position der nabenseitigen Freilaufkomponente 10 wird durch den radialen Absatz 35 in dem Nabengehäuse definiert.

Das Wälzlager 14 zur Lagerung des Nabengehäuses ist an dem Lagersitz 12 in dem zentrischen Aufnahmeraum 11 aufgenommen und wird in axialer Richtung durch die Innenfläche 19 des Ringflansches 18 der nabenseitigen Freilaufkomponente 10 und den radialen Lagerabsatz 36 in dem Nabengehäuse 2 definiert positioniert. Dabei ist vorzugsweise zwischen der Innenfläche 19 des Ringflansches 18 und dem Außenring 50 des Wälzlagers 14 ein geringes axiales Spiel, während das Wälzlager 14 spielfrei an dem radialen Lagerabsatz 36 in dem Nabengehäuse 2 anliegt.

Das Wälzlager 14 verfügt vorzugsweise über eine Dichteinheit 57 zur Abdichtung des Wälzlagers. Ebenso verfügt auch das andere Wälzlager 24 und die Rotorlager 6 und 7 verfügen vorzugsweise jeweils über derartige Dichteinheiten 57 zur jeweils beidseitigen Abdichtung.

Die rotorseitige Freilaufkomponente 20 weist an der Stirnseite 22 eine Ringscheibe 28 mit den dort ausgebildeten Eingriffselementen 33 auf. Die Ringscheibe 28 ist insbesondere einstückig mit einem zylindrischen Führungsabschnitt 23 der rotorseitigen Freilaufkomponente 20 ausgebildet. Im Inneren der Freilaufkomponente 20 drückt gegen die stirnseitige Innenfläche 29 vorzugsweise die insbesondere als Spiralfeder ausgebildete Vorbelastungseinrichtung 32, sodass die Freilaufkomponente 20 in die Eingriffsstellung 31 vorbelastet wird. Die Spiralfeder 32 stützt sich am anderen Ende vorzugsweise an dem Außenring des Rotorlagers 6 ab. Dadurch wird ein minimaler axialer Bauraum erzielt, wodurch die Steifigkeit der Nabe insgesamt noch deutlich erhöht werden kann.

Wie in Figur 3 eingezeichnet ist, wird ein axialer Abstand 26 zwischen den Wälzlagern 14 und 24 zur drehbaren Lagerung des Nabengehäuses erzielt, der deutlich größer ist als dies im Stand der Technik war. Dadurch kann die Steifigkeit und Stabilität der Nabe erheblich gesteigert werden. Durch diese erhebliche Steigerung des axialen Abstands 26, der mehrere Millimeter beträgt, kann auf eine zweiseitig schwimmende axiale Lagerung der Freilaufkomponenten 10 und 20 verzichtet werden und dennoch eine größere Steifigkeit der Nabe bereitgestellt werden. Die Abnutzung der insbesondere als Zahnscheiben ausgeführten Freilaufkomponenten 10, 20 erfolgt gleichmäßig und eine sichere Funktion wird erreicht. Außerdem kann das Gewicht der Nabe deutlich reduziert werden. Im Vergleich zum Stand der Technik kann der axiale Abstand 26 zwischen den Innenringen der Wälzlager zu Lagerung des Nabengehäuses um mehr als 5 oder sogar 6 mm vergrößert werden. Der axiale Abstand 27 zwischen den Rotorlagern kann ebenfalls um mehr als 1 mm vergrößert werden, sodass die Belastbarkeit der Nabe 1 zunimmt und die Seitensteifigkeit erheblich vergrößert werden kann.

Figuren 5 und 6 zeigen die nabenseitige Freilaufkomponente 10 in einer perspektivischen Ansicht und in einem Schnitt. Dabei wird deutlich, dass die nabenseitige Freilaufkomponente einen kompakten Aufbau erlaubt. Der ringförmige Fortsatz 17 ermöglicht der nabenseitige Freilaufkomponente 10 eine definierte axiale Positionierung im dem Nabengehäuse 2. Mit dem Befestigungsbereich 10a und dem dort ausgebildeten Außengewinde 10c wird die nabenseitige Freilaufkomponente 10 in das Nabengehäuse 2 eingeschraubt. Der Zentrierbereich 10b gewährleistet zusammen mit dem Zentrierabschnitt 2b im Nabengehäuse 2 einen definierten radialen Sitz der nabenseitigen Freilaufkomponente 10. Auch bei Austausch des Wälzlagers 14 oder der nabenseitigen Freilaufkomponente 10 wird ein reproduzierbarer Sitz erzielt.

Die Eingriffselemente 33 sind an an der axialen Außenseite 18b auf der Stirnseite 22 des Ringflansches 18 ausgebildet, der sich insbesondere von dem axialen und hier rohrförmigen Körperabschnitt 13 aus radial nach innen hin erstreckt.

Im radialen Querschnitt ist die etwa T-förmige Struktur 45 zu erkennen, an dem radial innen der Lagersitz 12 ausgebildet ist, an dem das Wälzlager 14 definiert aufgenommen ist.

Das Wälzlager 14 weist eine axiale Breite 16 auf und wird über den überwiegenden Teil seiner axialen Breite von hier zwischen 80 % und 90 % an dem Lagersitz 12 über der Länge 18a in dem axialen Körperabschnitt 13 gestützt. Dadurch, dass das Wälzlager 14 axial nach innen etwas übersteht, kann zudem noch eine genau definierte axiale Anordnung gewährleistet werden. Eine axiale Überbestimmung wird vermieden.

Das Wälzlager 14 verfügt über einen Außenring 50 und einen Innenring 52 zwischen denen die Wälzkörper 53 an Führungsrillen 56 angeordnet sind. Dichteinheiten 57 dichten das Wälzlager 14 in beide axialen Richtungen ab.

Im unteren Teil von Figur 5 wurde zur besseren Übersichtlichkeit die Darstellung des Wälzlagers 14 weggelassen. Im eingebauten Zustand wird das Wälzlager 14 durch die in das Nabengehäuse eingeschraubte Freilaufkomponente 10 axial in dem Nabengehäuse gesichert.

Figur 7 zeigt eine Darstellung wesentlicher Teile der erfindungsgemäßen Nabe 1. Links dargestellt ist der Endanschlag 39, der nach dem Einbau bzw. dem Einschieben des Wälzlagers 24 in die Nabenhülse 2 auf die Nabenachse 5 aufgesteckt werden kann. Die Nabenachse 5 weist radiale Verdickungen 43 und 44 auf. Auf der Rotorseite des Nabengehäuses 2 wird das Wälzlager 14 an dem Lagersitz 12 der nabenseitigen Freilaufkomponente 10 aufgenommen und zusammen mit der Freilaufkomponente 10 in das Nabengehäuse 2 eingeschraubt. Durch den Zentrierabschnitt 2b und den Zentrierbereich 10b wird eine definierte radiale Positionierung gewährleistet. Danach wird die Dichteinrichtung 38 eingeführt und es wird der Hülsenkörper 41 aufgeschoben.

In den Rotor 8 werden die Rotorlager 6 und 7 und dazwischen der Hülsenkörper 42 eingebracht. In den Rotor 8 werden die Vorbelastungseinrichtung 32 und die rotorseitige Freilaufkomponente 20 eingebracht und der Rotor 8 wird auf die Nabenachse 5 aufgeschoben. Schließlich wird der Endanschlag 40 aufgeschoben.

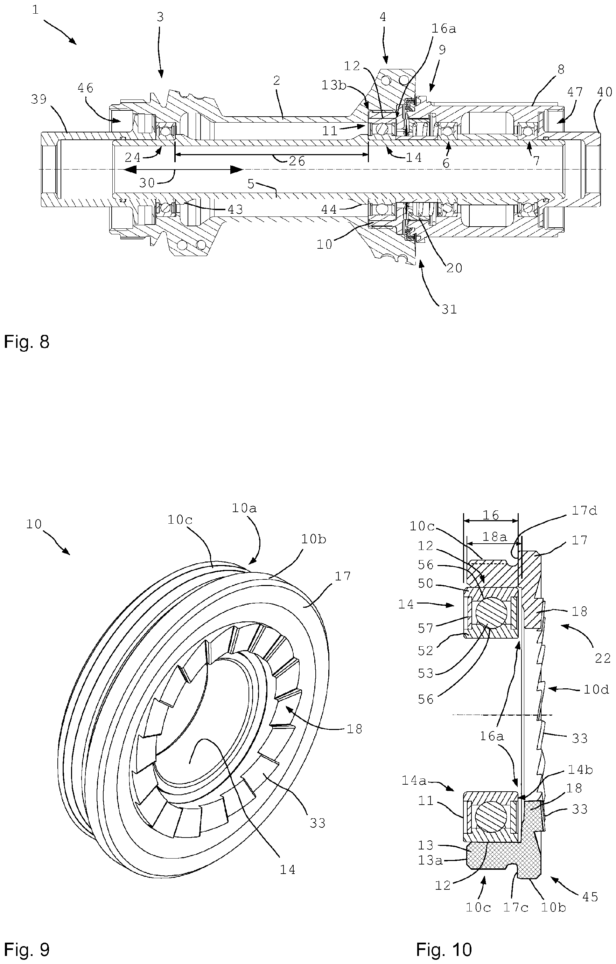

In den Figuren 8 bis 10 ist ein leicht modifiziertes Ausführungsbeispiel abgebildet. Die Bezugszeichen sind gleich gewählt, sodass die Beschreibung des vorherigen Ausführungsbeispiels bis auf einige abweichende Teile identisch übernommen werden kann und ebenfalls zur Beschreibung dieses Ausführungsbeispiels dient. Wesentliche Unterschiede und die vom vorherigen Ausführungsbeispiel abweichenden wesentlichen Teile werden im Folgenden erläutert.

Dabei zeigt Fig. 8 einen Schnitt durch die vollständige Nabe, Fig. 9 eine perspektivische Darstellung der nabenseitigen Freilaufkomponente 10 und Fig. 10 einen Schnitt durch Fig. 9.

Im Unterschied zum vorherigen Ausführungsbeispiel sind bei der Nabe 1 hier keine radial umlaufenden Speichenflansche vorgesehen, sondern die Nabe 1 ist mit Aufnahmen zur Montage sogenannter "straightpull"-Speichen ausgerüstet. Das Nabengehäuse kann dann entsprechend zur Aufnahme von z. B. gerade ausgebildeten und ungekröpften Speichen ("straightpull-Speichen") ausgestaltet sein. Die Nabe 1 nach Fig. 8 kann aber ebenso wie die Nabe 1 nach Fig. 3 mit konventionellen und umlaufenden Speichenflanschen oder dergleichen ausgerüstet sein.

Ein weiterer Unterschied zu der Nabe 1 nach Fig. 3 ist, dass in Fig. 8 und auch in Fig. 10 jeweils explizit ein freier Abstand 16a zu erkennen ist. Der freie Abstand 16a stellt ein genügend großes axiales Spiel zur Verfügung. Das in der Freilaufkomponente 10 aufgenommene Wälzlager 14 liegt an dem axial inneren Ende 14a mit dem äußeren Lagerring bzw. Außenring 50 an dem Lagerabsatz 36 in dem Nabengehäuse 2 an, um das Wälzlager 14 definiert auszurichten.

Das axial äußere Ende 14b des Wälzlagers 14 weist den freien Abstand 16a bzw. das Spiel oder den Spalt zu der axialen Innenseite 18c des Ringflansches 18 auf. Insbesondere ist der freie Abstand 16a größer als 0,01 mm und beträgt vorzugsweise mehr als 0,1 mm, insbesondere etwa 0,2 mm. In dem Ausführungsbeispiel nach Fig. 3 ist auch ein (geringerer) freier Abstand 16a vorhanden, der aber bei dem Maßstab der Zeichnung nicht erkennbar ist.

In. Fig. 10 ist der Anschlag 17d zu erkennen, der an der axialen Innenseite 17c des Fortsatzes 17 ausgebildet ist. Im montierten Zustand liegt der Anschlag 17d an dem radialen Lagerabsatz 36 in dem Nabengehäuse an. Der Anschlag 17d verhindert zusammen mit dem radialen Lagerabsatz 36, dass sich die nabenseitige Freilaufkomponente immer weiter in das Nabengehäuse 2 einschraubt. Jedes auf die Axialverzahnung einwirkende Drehmoment führt ohne eine solche Begrenzung im Laufe der Zeit zu einem immer stärkeren Einschrauben. Dadurch könnte es ohne den Anschlag 17d zu einem Aufdehnen und sogar einem Bruch des Nabengehäuses kommen, da der Freilauf zur Übertragung von Drehmomente von bis zu 400 Nm oder mehr ausgelegt ist.

Dazu trägt auch der lichte Abstand 13b bei, der (in axialer Richtung gesehen) zwischen der axial inneren Stirnseite des axialen Körperabschnitts und dem Nabengehäuse ausgebildet ist und hier zwischen etwa 0,08 mm und 0,35 mm beträgt. Dadurch wird sicher gestellt, dass der axiale Körperabschnitt 13 bis an den Anschlag 17d in das Nabengehäuse eingeschraubt wird und sich dort an dem Nabengehäuse abstützt.

In entsprechender Weise ist eine Demontage und Wartung der Nabe 1 einfach und kann jederzeit manuell durchgeführt werden, um die Nabe nach dem Einsatz beispielsweise im Gelände oder nach einer längeren Straßenfahrt zu reinigen. Dadurch kann jederzeit eine zuverlässige Funktion sichergestellt werden.

Das Nabengehäuse nach den Figuren 8 bis 10 verfügt auch über einen Befestigungsbereich 2a, einen Zentrierabschnitt 2b und ein Innengewinde 2c, in welches ein Außengewinde 10c der nabenseitigen Freilaufkomponente 10 eingeschraubt ist, während eine Führung und/oder Zentrierung durch die Passung von dem Zentrierbereich 10b in dem Zentrierabschnitt 2b erreicht wird.

Auch hier ist eine radiale Toleranz bzw. ein Spiel in dem Zentrierbereich 10b erheblich kleiner als in dem Befestigungsbereich 10a, wodurch eine reproduzierbare Montage und ein reproduzierbarer Austausch von Teilen und Komponenten ermöglicht wird. Durch die exaktere Positionierung kann auch die Zuverlässigkeit und Haltbarkeit gesteigert werden.

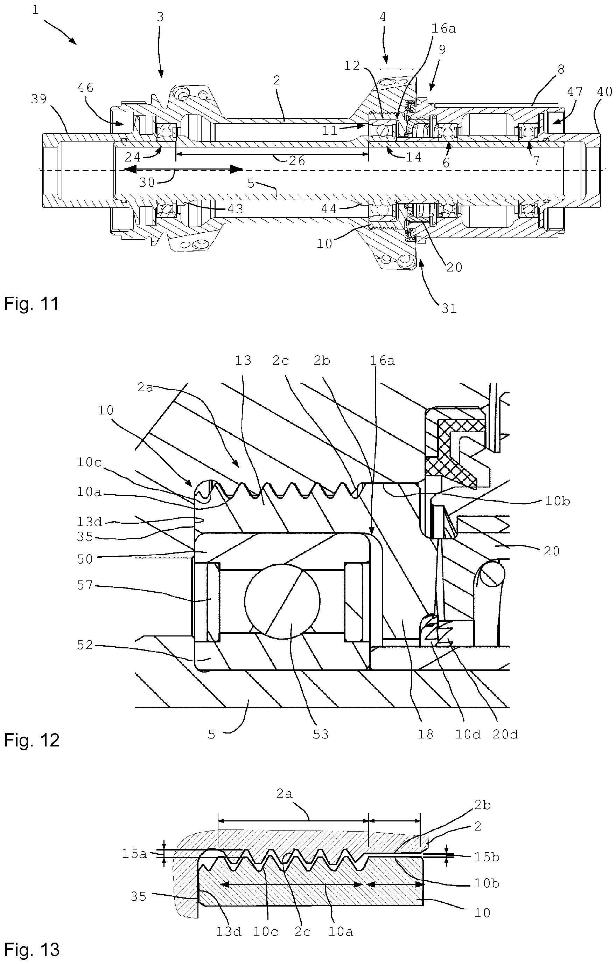

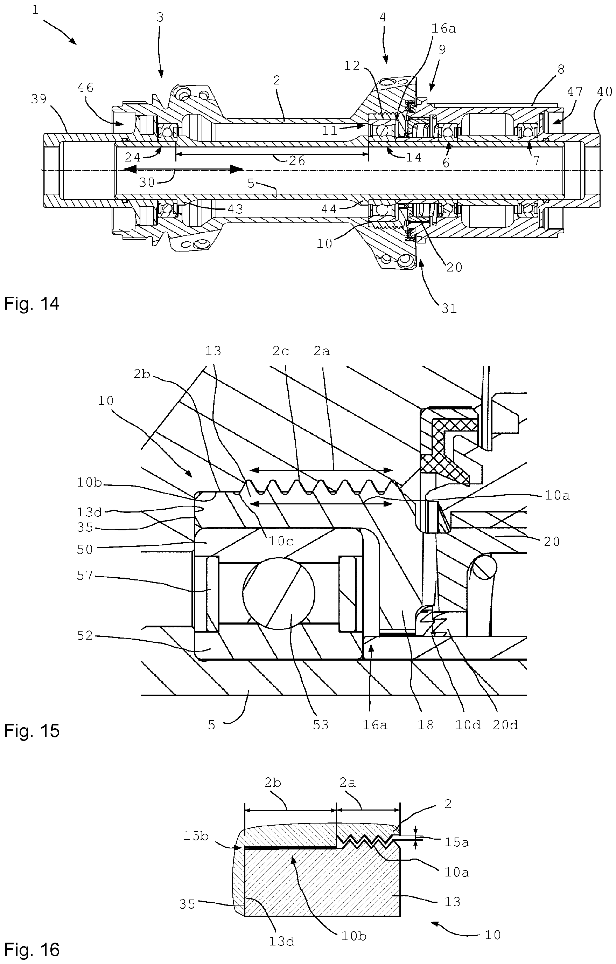

In den Figuren 11 bis 13 und in den Figuren 14 bis 16 sind jeweils leicht modifizierte Ausführungsbeispiele dargestellt. Die Bezugszeichen sind auch hier gleich gewählt, sodass die Beschreibung der vorherigen Ausführungsbeispiele bis auf einige abweichende Teile identisch übernommen werden kann und ebenfalls zur Beschreibung dieser Ausführungsbeispiels dient und hier nicht vollständig wiederholt wird. Wesentliche Unterschiede und die vom vorherigen Ausführungsbeispiel abweichenden wesentlichen Teile werden im Folgenden erläutert.

Dabei zeigt Fig. 11 einen Schnitt durch die vollständige Nabe 1, Fig. 12 ein vergrößertes Detail aus Fig. 11 und Figur 13 eine vereinfachte und nicht maßstäbliche stark schematische Prinzipskizze eines Details aus Figur 12.

Ein wesentlicher Unterschied zum Ausführungsbeispiel nach Figur 8 besteht darin, dass die nabenseitige Freilaufkomponente 10 praktisch keinen oder sogar gar keinen radialen Fortsatz 17 aufweist. Der axiale Körperabschnitt 13 der nabenseitigen Freilaufkomponente 10 weist einen etwa gleichbleibenden radialen Durchmesser auf. Zu dem axial inneren Ende des axialen Körperabschnitts 13 hin erstreckt sich der Befestigungsbereich 10a mit dem Außengewinde 10c, während sich zum axial äußeren Ende hin der Zentrierbereich 10b erstreckt, der zusammen mit dem Zentrierabschnitt 2b eine genau definierte Passung und somit genau definierte radiale Positionierung und Ausrichtung der nabenseitigen Freilaufkomponente 10 gewährleistet. Die radialen Toleranzen bzw. das radiale Spiel ist im Zentrierbereich 10b erheblich geringer als im Befestigungsbereich 10a. Bei dieser Ausgestaltung kann die nabenseitige Freilaufkomponente 10 zunächst zylindrisch mit dem Durchmesser des Zentrierbereiches 10b ausgebildet werden und es ist möglich, dass anschließend nur über einen Teil der axialen Länge ein Gewinde eingeschnitten oder eingebracht wird, wodurch der Befestigungsbereich 10a entsteht. Es kann in dem Befestigungsbereich 10a auch der Außendurchmesser noch etwas reduziert werden, um ein leichteres Durchführen durch den Zentrierabschnitt 2b zu ermöglichen.

Bei dieser Nabe 1 wird ein zu starkes Einschrauben der Befestigungskomponente 10 in das Nabengehäuse 2 dadurch verhindert, dass die axial innere Stirnseite 13a des axialen Körperabschnitts 13 an dem radialen Absatz 35 in dem Nabengehäuse anliegt.

Figur 13 zeigt stark schematisch ein Detail aus Figur 12, wobei die Darstellung nicht maßstäblich ist, um das Prinzip besser zeigen zu können. Dort, wo sich der Zentrierabschnitt 2b und der Zentrierbereich 10b überlappen, liegt eine radiale Toleranz 15b bzw. ein radiales Spiel vor, während bei dem Befestigungsbereich 10a und dem Befestigungsabschnitt 2a eine erheblich größere Toleranz 15a vorhanden ist. Dadurch wird eine deutlich bessere und wiederholbarere radiale Positionierung der nabenseitigen Freilaufkomponente 10 und damit auch des Wälzlagers 14 erzielt, welches ja die eine Seite der Nabe 1 drehbar auf der Nabenachse 5 lagert. Schon kleine radiale Änderungen können an der Felge große axiale Auswirkungen produzieren.

Diese Ausführungsform nach den Figuren 11 bis 13 ermöglicht eine besonders schlanke Ausgestaltung der Nabe 1. Es ist nochmals eine Gewichtsreduktion möglich, auch durch Reduktion der Wandstärken im Nabengehäuse. Es kann gegenüber einer ähnlich aufgebauten Nabe, bei der das Wälzlager nicht in einem Lagersitz an der Freilaufkomponente aufgenommen ist, sondern direkt in das Nabengehäuse eingesetzt ist, das Gesamtgewicht um 5 gr oder sogar 10 gr oder mehr verringert werden. Das ist bei gesteigerter Stabilität eine erhebliche Reduktion von ca. 5%. Auch der Luftwiderstand kann durch die schlankere Gestaltung reduziert werden.

Fig. 14 zeigt einen Schnitt durch die Nabe 1 nach einem weiteren Ausführungsbeispiel, Fig. 15 ein vergrößertes Detail aus Fig. 14 und Figur 16 schließlich eine vereinfachte und nicht maßstäbliche stark schematische Prinzipskizze eines Details aus Figur 15. Im Unterschied zum Ausführungsbeispiel nach den Figuren 11 bis 13 befinden sich der Zentrierabschnitt 2b und der Zentrierbereich 10b axial innen, während der Befestigungsabschnitt 2a und der Befestigungsbereich 10a axial weiter außen angeordnet sind.

Auch hier ist eine einfache Fertigung möglich. Das axial innere Ende 13a des axialen Körperabschnittes 13 liegt an dem radialen Absatz 35 im Nabengehäuse 2 an und verhindert ein zu starkes Einschrauben der nabenseitigen Freilaufkomponente 10.

Figur 16 zeigt stark schematisch ein Detail aus Figur 15 und zeigt wie zuvor Figur 13, dass am Zentrierbereich 10b eine radiale Toleranz 15b bzw. ein radiales Spiel vorliegt, welches kleiner ist als in dem Befestigungsbereich 10a.

Die weiteren Details aus den Figuren 14 bis 16 entsprechen im Wesentlichen den vorherigen Ausführungsbeispielen.

In allen Ausgestaltungen erlaubt die Nabe eine höhere Seitensteifigkeit, eine erhöhte Biegesteifigkeit und einen noch sicheren Betrieb und eine bessere Wartbarkeit. Gleichzeitig kann das Gewicht gesenkt werden, was insbesondere im sportlichen Bereich und im professionellen Bereich von großer Bedeutung ist.

Ein weiterer Vorteil ist, dass der Nabenkörper einen kleineren Querschnitt aufweist und deshalb strömungsgünstiger ist. Die Anzahl der Teile ist geringer, sodass Wartung, Montage und Demontage einfacher werden. Auch die Fertigung der Nabe wird einfacher.

In allen Ausgestaltungen ist es bevorzugt, dass an den Wälzlagern geschliffene Lagerinnenringe eingesetzt werden. Ebenso kann auch ein geschliffener Außenring eingesetzt werden, sodass sehr geringe Reibungswerte erzielt werden.

**Bezugszeichenliste:**

| | | | |
|---|---|---|---|
| 1 | Nabe | 25 | Steckachse |
| 2 | Nabengehäuse | 26 | Lagerabstand 14, 24 |
| 2a | Befestigungsabschnitt | 27 | Lagerabstand 6, 7 |
| 2b | Zentrierabschnitt | 28 | Ringscheibe |
| 2c | Innengewinde | 29 | Innenfläche von 28 |
| 3, 4 | Endbereich | 30 | axiale Richtung |
| 5 | Nabenachse | 31 | Eingriffsstellung |
| 6, 7 | Rotorlager | 32 | Vorbelastungseinrichtung |
| 8 | Rotor | 33 | Eingriffselemente |
| 9 | Freilaufeinrichtung | 35 | radialer Absatz in 2 |
| 10 | nabenseitige Freilaufkomponente | 36 | radialer Lagerabsatz in 2 |
| | | 37 | Innenkontur in 8 |
| 10a | Befestigungsbereich | 38 | Dichteinrichtung |
| 10b | Zentrierbereich | 39 | Endanschlag |
| 10c | Außengewinde | 40 | Endanschlag |
| 10d | Axialverzahnung | 41 | Hülsenkörper |
| 11 | Aufnahmeraum | 42 | Hülsenkörper |
| 12 | Lagersitz | 43 | radiale Verdickungen |
| 13 | axialer Körperabschnitt | 44 | radiale Verdickungen |
| 13a | axial innere Stirnseite | 45 | T-Form |
| 13b | lichter Abstand | 46 | Doppelflansch von 39 |
| 13d | Anschlag | 47 | Dichtflansch von 40 |
| 14 | Wälzlager | 48 | O-Ring |
| 14a | axial inneres Ende | 49 | Schnellspanner |
| 14b | axial äußeres Ende | 50 | Außenring von 14 |
| 15a | Toleranz, Spiel | 51 | Außenring von 24 |
| 15b | Toleranz, Spiel | 52 | Innenring |
| 16 | axiale Breite | 53 | Wälzkörper |
| 16a | Abstand | 55 | Lauffläche an 50 |
| 17 | Fortsatz | 56 | Führungsrille |
| 17c | axiale Innenseite | 57 | Dichteinheit |
| 17d | Anschlag | 58 | Dichtring |
| 18 | Ringflansch | 60 | Außenring von 6, 7 |
| 18a | Länge von 18 | 61 | Innenring von 6, 7 |
| 18b | axiale Außenseite | 100 | Fahrrad |
| 18c | axiale Innenseite | 101 | Rad, Vorderrad |
| 19 | Innenfläche von 18 | 102 | Rad, Hinterrad |
| 20 | rotorseitige Freilaufkomponente | 103 | Rahmen |
| | | 104 | Gabel, Federgabel |
| 20d | Axialverzahnung | 105 | Hinterraddämpfer |
| 21 | Außenkontur | 106 | Lenker |
| 22 | Stirnseite von 10, 20 | 107 | Sattel |
| 23 | zylindrischer Führungsab- | 109 | Speiche |
| | schnitt | 110 | Felge |
| 24 | Wälzlager | 112 | Tretkurbel |

## Patentansprüche

1. Nabe (1) für wenigstens teilweise muskelbetriebene Fahrzeuge und insbesondere Fahrräder (100) umfassend ein Nabengehäuse (2), welches gegenüber einer Nabenachse (5) drehbar gelagert ist, einen mit wenigstens zwei Rotorlagern (6, 7) gegenüber der Nabenachse (2) drehbar gelagerten Rotor (8),
und eine Freilaufeinrichtung (9) mit zwei miteinander zusammenwirkenden Freilaufkomponenten (10, 20), nämlich einer nabenseitigen Freilaufkomponente (10) und einer rotorseitigen Freilaufkomponente (20),
wobei die beiden Freilaufkomponenten (10, 20) jeweils axiale Eingriffselemente (33) aufweisen und in axialer Richtung (30) relativ zueinander wenigstens zwischen einer Freilaufstellung und einer ineinander eingreifenden Eingriffsstellung (31) bewegbar sind,
wobei in der nabenseitigen Freilaufkomponente (10) Wälzkörper (53) definiert aufgenommen sind, um das Nabengehäuse (2) gegenüber der Nabenachse (5) zu lagern,
**dadurch gekennzeichnet,**
**dass** in dem Nabengehäuse (2) ein Befestigungsabschnitt (2a) und ein Zentrierabschnitt (2b) ausgebildet sind und dass an der nabenseitigen Freilaufkomponente (10) ein Befestigungsbereich (10a) und ein Zentrierbereich (10b) ausgebildet sind, wobei eine radiale Toleranz (15a) zwischen der nabenseitigen Freilaufkomponente (10) und dem Nabengehäuse (2) an dem Befestigungsabschnitt (2a) größer ist als an dem Zentrierabschnitt (2b),
und **dass** der Befestigungsbereich (10a) mit dem Befestigungsabschnitt (2a) verbunden ist und dass der Zentrierbereich (10b) an dem Zentrierabschnitt (2b) zentriert wird.

2. Nabe (1) nach dem vorhergehenden Anspruch, wobei die radiale Toleranz (15b) zwischen der nabenseitigen Freilaufkomponente (10) und dem Nabengehäuse (2) an dem Zentrierabschnitt (2b) weniger als halb so groß ist wie an dem Befestigungsabschnitt (2a) .

3. Nabe (1) nach einem der vorhergehenden Ansprüche, wobei der Zentrierabschnitt (2b) und der Zentrierbereich eine Spielpassung mit weniger als 20 µm oder weniger als 5 µm Toleranz (15b) bilden.

4. Nabe (1) nach einem der vorhergehenden Ansprüche, wobei der Zentrierabschnitt (2b) und der Zentrierbereich eine Übergangspassung ausbilden.

5. Nabe (1) nach einem der vorhergehenden Ansprüche, wobei an dem Zentrierabschnitt (2b) und dem Zentrierbereich eine Presspassung ausgebildet ist.

6. Nabe (1) nach einem der vorhergehenden Ansprüche, wobei der Befestigungsabschnitt (2a) und der Befestigungsbereich (10a) jeweils über Gewinde (2c, 10c) verfügen, welche miteinander verschraubt sind.

7. Nabe (1) nach einem der vorhergehenden Ansprüche, wobei der Befestigungsbereich (10a) einen größeren Außendurchmesser aufweist als der Zentrierbereich (10b).

8. Nabe (1) nach einem der vorhergehenden Ansprüche, wobei der Befestigungsbereich (10a) über ein Außengewinde (10c) verfügt, welcher in ein Innengewinde (2c) an dem Befestigungsabschnitt (2a) des Nabengehäuses (2) eingeschraubt ist.

9. Nabe (1) nach einem der vorhergehenden Ansprüche, wobei die nabenseitige Freilaufkomponente (10) einen axialen Körperabschnitt (13) mit einem inneren zentrischen Aufnahmeraum (11) und einem daran ausgebildeten Lagersitz (12) und einem daran aufgenommenen Wälzlager (14) zur drehbaren Lagerung des Nabengehäuses (2) aufweist.

10. Nabe (1) nach einem der vorhergehenden Ansprüche, wobei die nabenseitige Freilaufkomponente (10) einen von dem axialen Körperabschnitt (13) nach außen ragenden Fortsatz (17) aufweist, an dem der Zentrierbereich (10b) ausgebildet ist und wobei an der axialen Innenseite (17c) des Fortsatzes (17) ein Anschlag (17d) ausgebildet ist, der im montierten Zustand an einem radialen Absatz (35) des Nabengehäuses (2) anliegt und/oder wobei an einer Stirnseite (13a) des axialen Körperabschnitts (13) ein Anschlag (13d) ausgebildet ist, der im montierten Zustand an einem radialen Absatz (35) des Nabengehäuses (2) anliegt.

11. Nabe (1) nach einem der vorhergehenden Ansprüche, wobei die nabenseitige Freilaufkomponente (10) einen nach innen ragenden Ringflansch (18) aufweist, und wobei an der axialen Außenseite (18b) des Ringflansches (18) die Eingriffselemente (33) ausgebildet sind.

12. Nabe (1) nach einem der vorhergehenden Ansprüche, wobei in dem Nabengehäuse (2) ein radialer Lagerabsatz (36) zur definierten axialen Ausrichtung des in der nabenseitigen Freilaufkomponente (10) aufgenommenen Wälzlagers (14) ausgebildet ist.

13. Nabe (1) nach einem der vorhergehenden Ansprüche, wobei zwischen dem in der nabenseitigen Freilaufkomponente (10) aufgenommenen Wälzlager (14) und der axialen Innenseite (18c) des Ringflansches ein freier Abstand (16a) ausgebildet ist und/oder wobei zwischen einer inneren axialen Stirnseite des axialen Körperabschnitts (13) und dem Nabengehäuse ein lichter Abstand (13b) ausgebildet ist.

## Claims

1. Hub (1) for at least partially muscle-powered vehicles and in particular bicycles (100) comprising a hub shell (2) which is rotatably supported relative to a hub axle (5), a rotor (8) rotatably supported relative to the hub axle (2) by at least two rotor bearings (6, 7),
and a freewheel device (9) having two interacting freewheel components (10, 20) namely, a hub-side freewheel component (10) and a rotor-side freewheel component (20),
wherein the two freewheel components (10, 20) each comprise axial engagement elements (33) and are movable relative to one another in the axial direction (30) at least between a freewheel position and an intermeshing engagement position (31),
wherein the hub-side freewheel component (10) provides for defined accommodation of rolling members (53) to support the hub shell (2) relative to the hub axle (5),
**characterised in**
**that** an attachment portion (2a) and a centering portion (2b) are configured in the hub shell (2) and that an attachment area (10a) and a centering area (10b) are configured on the hub-side freewheel component (10), wherein a radial tolerance (15a) between the hub-side freewheel component (10) and the hub shell (2) on the attachment portion (2a) is larger than on the centering portion (2b),
and **that** the attachment area (10a) is connected with the attachment portion (2a) and that the centering area (10b) is centered on the centering portion (2b).

2. The hub (1) according to the preceding claim wherein the radial tolerance (15b) between the hub-side freewheel component (10) and the hub shell (2) on the centering portion (2b) is less than half that on the attachment portion (2a).

3. The hub (1) according to any of the preceding claims wherein the centering portion (2b) and the centering area form a free fit of less than 20 µm or less than 5 µm tolerance (15b).

4. The hub (1) according to any of the preceding claims wherein the centering portion (2b) and the centering area form a transition fit.

5. The hub (1) according to any of the preceding claims wherein an interference fit is formed on the centering portion (2b) and the centering area.

6. The hub (1) according to any of the preceding claims wherein the attachment portion (2a) and the attachment area (10a) are each provided with a thread (2c, 10c) which are screwed with one another.

7. The hub (1) according to any of the preceding claims wherein the outer diameter of the attachment area (10a) is larger than that of the centering area (10b).

8. The hub (1) according to any of the preceding claims wherein the attachment area (10a) is provided with an external thread (10c) which screws into an internal thread (2c) on the attachment portion (2a) of the hub shell (2).

9. The hub (1) according to any of the preceding claims wherein the hub-side freewheel component (10) has an axial body section (13) with an inner central receiving space (11) and a bearing seat (12) formed thereat and a roller bearing (14) received thereat to rotatably support the hub shell (2).

10. The hub (1) according to any of the preceding claims wherein the hub-side freewheel component (10) comprises an appendix (17) protruding outwardly from the axial body section (13) where the centering area (10b) is configured and wherein a stopper (17d) is formed on the axially inside surface (17c) of the appendix (17) which when mounted rests against a radial shoulder (35) of the hub shell (2) and/or wherein a stopper (13d) is formed on a front face (13a) of the axial body section (13) which in the mounted state rests against a radial shoulder (35) of the hub shell (2).

11. The hub (1) according to any of the preceding claims wherein the hub-side freewheel component (10) comprises an annular flange (18) projecting inwardly, and wherein the engagement components (33) are configured on the axially outside surface (18b) of the annular flange (18).

12. The hub (1) according to any of the preceding claims wherein a radial bearing shoulder (36) is formed in the hub shell (2) for defined axial alignment of the roller bearing (14) accommodated in the hub-side freewheel component (10).

13. The hub (1) according to any of the preceding claims wherein a free distance (16a) is configured between the roller bearing (14) accommodated in the hub-side freewheel component (10) and the axially inside surface (18c) of the annular flange and/or wherein a clear distance (13b) is configured between an inner axial front face of the axial body section (13) and the hub shell.

## Revendications

1. Moyeu (1) pour véhicules à actionnement au moins partiellement musculaire, en particulier bicyclettes (100) comprenant un boîtier de moyeu (2), lequel est monté de manière rotative par rapport à un axe de moyeu (5), un rotor (8) monté de manière rotative par rapport à l'axe de moyeu (5) via au moins deux roulements de rotor (6, 7),
et un dispositif de roue libre (9) comprenant deux composants de roue libre (10, 20) coopérant l'un avec l'autre, c'est-à-dire un composant de roue libre côté moyeu (10) et un composant de roue libre côté rotor (20), les deux composants de roue libre (10, 20) comprenant chacun des éléments d'engagement axiaux (33) et étant mobiles en direction axiale (30) relativement l'un par rapport à l'autre au moins entre une position de roue libre et une position d'engagement (31) s'engageant l'un dans l'autre, moyeu dans lequel des éléments de roulement (53) sont reçus de manière définie dans le composant de roue libre côté moyeu (10) pour supporter le boîtier de moyeu (2) par rapport à l'axe de moyeu (5),
**caractérisé en ce que**
une partie de fixation (2a) et une partie de centrage (2b) sont réalisées dans le boîtier de moyeu (2)
et **en ce qu'**une région de fixation (10a) et une région de centrage (10b) sont réalisées sur le composant de roue libre côté moyeu (10), une tolérance radiale (15a) entre le composant de roue libre côté moyeu (10) et le boîtier de moyeu (2) sur la partie de fixation (2a) étant supérieure à celle sur la partie de centrage (2b),
et **en ce que** la région de fixation (10a) est raccordée à la partie de fixation (2a) et **en ce que** la région de centrage (10b) est centrée sur la partie de centrage (2b).

2. Moyeu (1) selon la revendication précédente, dans lequel la tolérance radiale (15b) entre le composant de roue libre côté moyeu (10) et le boîtier de moyeu (2) sur la partie de centrage (2b) est inférieure à la moitié de celle sur la partie de fixation (2a).

3. Moyeu (1) selon l'une des revendications précédentes, dans lequel la partie de centrage (2b) et la région de centrage forment un ajustement de jeu avec une tolérance (15b) inférieure à 20 µm ou inférieure à 5 µm.

4. Moyeu (1) selon l'une des revendications précédentes, dans lequel la partie de centrage (2b) et la région de centrage réalisent un ajustement de transition.

5. Moyeu (1) selon l'une des revendications précédentes, dans lequel un ajustement serré est réalisé sur la partie de centrage (2b) et la région de centrage.

6. Moyeu (1) selon l'une des revendications précédentes, dans lequel entre la partie de fixation (2a) et la région de fixation (10a) sont chacune pourvues d'un filetage (2c, 10c), lesquelles sont vissées l'une avec l'autre.

7. Moyeu (1) selon l'une des revendications précédentes, dans lequel la région de fixation (10a) présente un diamètre extérieur supérieur à celui de la région de centrage (10b).

8. Moyeu (1) selon l'une des revendications précédentes, dans lequel la région de fixation (10a) est pourvue d'un filetage extérieure (10c), qui est vissé dans un filetage intérieur (2c) sur la partie de fixation (2a) du boîtier de moyeu (2).

9. Moyeu (1) selon l'une des revendications précédentes, dans lequel le composant de roue libre côté moyeu (10) comprend une partie de corps axiale (13) munie d'un espace de réception central intérieur (11) et un siège de roulement (12) réalisé sur ce dernier, et un palier à roulement (14) reçu sur ce dernier pour supporter de manière rotative le boîtier de moyeu (2).

10. Moyeu (1) selon l'une des revendications précédentes, dans lequel le composant de roue libre côté moyeu (10) comprend un prolongement (17) s'étendant vers l'extérieur depuis la partie de corps axiale (13), prolongement sur lequel est réalisée la région de centrage (10b), et dans lequel une butée (17d) est réalisée sur la face interne axiale (17c) du prolongement (17), butée qui repose sur un épaulement radiale (35) du boîtier de moyeu (2) dans l'état monté, et/ou dans lequel une butée (13d) est réalisée sur une face frontale (13a) de la partie de corps axiale (13), qui dans l'état monté repose sur un épaulement radiale (35) du boîtier de moyeu (2).

11. Moyeu (1) selon l'une des revendications précédentes, dans lequel le composant de roue libre côté moyeu (10) comprend un flasque annulaire (18) s'étendant vers l'intérieur, et dans lequel les éléments d'engagement (33) sont réalisés sur la face extérieure (18b) du flasque annulaire (18).

12. Moyeu (1) selon l'une des revendications précédentes, dans lequel un épaulement de support radial (36) est réalisé dans le boîtier de moyeu (2) pour l'alignement axial défini du palier à roulement (14) reçu dans le composant de roue libre côté moyeu (10).

13. Moyeu (1) selon l'une des revendications précédentes, dans lequel un écart libre (16a) est réalisé entre le palier à roulement (14) reçu dans le composant de roue libre côté moyeu (10) et la face intérieure axiale (18c) du flasque annulaire et/ou un écart de dégagement (13b) est réalisé entre une face frontale axiale intérieure de la partie de corps axiale (13) et le boîtier de moyeu.
